# EUROPEAN PATENT SPECIFICATION

(11) **EP 0 637 889 B1**
(45) Date of publication and mention of the grant of the patent: **17.01.2001**
(21) Application number: 94112119.6
(22) Date of filing: 03.08.1994
(51) Int. Cl.: H04N 7/01, H04N 7/12

(54) **Device for converting the frame rate of an image**
Einrichtung zur Umsetzung der Vollbildfrequenz
Dispositif pour convertir la fréquence de trame d'image

(30) Priority: 06.08.1993 KR 1528993; 07.08.1993 KR 1536793; 07.08.1993 KR 1543093; 18.08.1993 KR 1603193
(43) Date of publication of application: 08.02.1995
(73) Proprietor: LG ELECTRONICS INC., Seoul (KR)
(72) Inventor: Lee, Dong Ho, Socho-ku, Seoul (KR)
(74) Representative: Lehn, Werner, Dipl.-Ing.

(56) References cited:
- EP-A- 0 534 350
- WO-A-93/11634
- US-A- 4 941 044
- SIGNAL PROCESSING. IMAGE COMMUNICATION, vol.5, no.1/2, February 1993, AMSTERDAM NL pages 59 - 74 BURFIELD ET AL 'A VLSI IMPLEMENTATION STUDY OF A 10 Mbit/s VIDEO CODER'
- INTERNATIONAL ZURICH SEMINAR ON DIGITAL COMMUNICATIONS 1984 pages 57 - 61 BERGMANN 'MOTION ADAPTIVE FRAME INTERPOLATION'
- SIGNAL PROCESSING OF HDTV, II, TURIN, 30.08-01.09 1989 pages 649 - 654 HAGHIRI ET AL 'A MOTION COMPENSATED FIELD RATE CONVERSION ALGORITHM'

## Description

### FIELD OF THE INVENTION

This invention relates to a device for converting the frame rate of an image signal, more particularly to a device for converting image signal frame format which can convert frame rate through frame interpolation.

### BACKGROUND OF THE INVENTION

In general, digital transmission of image signal requires high compression. For example, in transmission methods of image signals, there are H.261 for teleconferencing, MPEG I for multimedia, MPEG II for multipurpose use such as for a digital TV etc., and, besides, a compression method for HDTV, all of which employ, for a high compression, a method for compressing through compensation of motion so as to eliminate duplication existing on time base.

Especially, in order to raise compression ratio of H.261 and MPEG I, a dessimination is carried out lowering frame rate for a coding, other than the method for compression through compensation of motion explained above. That is, the compression is carried out with a lowered frame rate to 25Hz or 30Hz.

However, even though a transmission has been carried out compressed with a lowered frame rate to 25Hz ot 30Hz, signals transmitted compressed with a lowered frame rate to 25Hz or 30Hz should be converted into signals with a frame rate of 50Hz or 60Hz for displaying on a monitor at the stage of final display.

And to accommodate film modes with a frame rate of 24Hz or 30Hz, film mode signals transmitted compressed to a frame rate 24Hz or 30Hz should be converted into signals with a frame rate of 60Hz to facilitate displaying on a monitor at the final display stage.

### SUMMARY OF THE INVENTION

The object of this invention for the foregoing can be achieved by providing a device for converting the frame rate of an image signal which can convert frame rates through classification of areas by pixels, and carrying out compensation of motion and averaging interpolation according to the classified areas.

These and other objects and features of this invention can be achieved by providing a device having the features of appended claim 1.

### BRIEF DESCRIPTION OF THE DRAWINGS

FIG.1 is a block diagram of a device for converting image signal frame rates in accordance with this invention.

FIG.2 shows area markings of pixels classified in accordance with this invention.

FIG.3 shows a basic unit for coding.

FIG.4 shows details of the frame rate converter of FIG.1.

FIG.5 shows signal wave patterns for each part of FIG.4.

FIG.6 shows details of the pixel area classification part of FIG.4.

FIG.7 shows details of another embodiment of the frame rate conversion part of FIG.1.

FIG.8 shows details of a 60Hz/59.94Hz frame rate conversion part.

FIG.9 shows details of the control part of FIG.8.

FIG.10 shows details of a 59.94Hz/60Hz frame rate conversion part.

FIG.11 shows details of the control part of FIG.10.

### DETAILED DESCRIPTION OF THE INVENTION.

Details of this invention is to be explained hereinafter, referring to attached drawings.

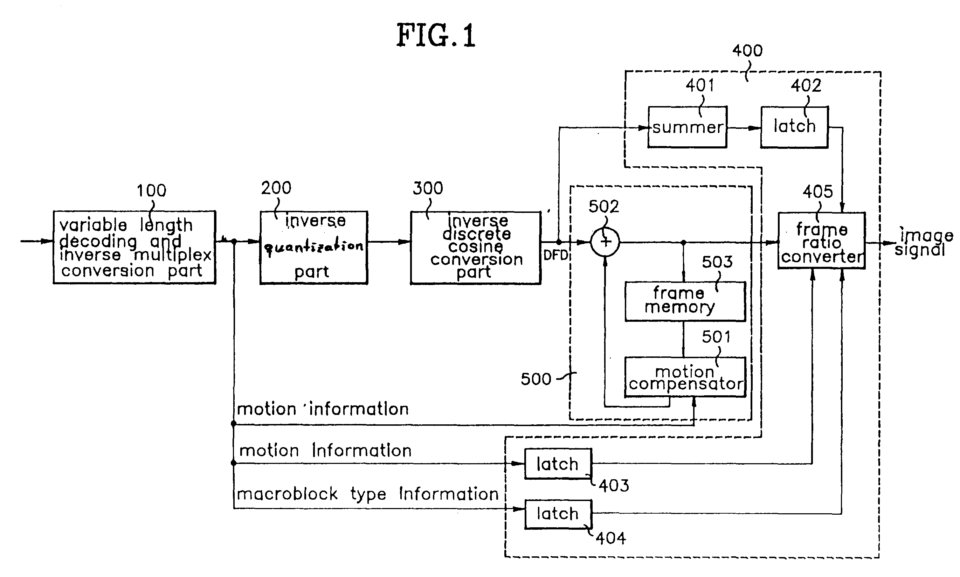

As shown in FIG.1, a device for converting frame rate in accordance with this invention includes a variable length decoding and inverse multiplex conversion part 100, an inverse quantization conversion part 200, a inverse discrete cosine conversion part 300, a motion compensation part 500, and a frame rate conversion part 400, for converting frame rates of image signals.

The variable length decoding and inverse multiplex conversion part 100 restores the incoming compressed bit stream to meaningful signals by carrying out variable length decoding, and classifies into motion information, macroblock type information, quantum conversion coefficient and control parameters by carrying out inverse multiplex conversion.

The inverse quantization conversion part 200 carries out an inverse quantization conversion according to the quantum conversion coefficient received from the variable length decoding and inverse multiplex conversion part 100, and the inverse cosine conversion part 300 generates displaced frame difference(DFD) based on motion ratio estimation by carrying out a inverse cosine conversion of the inverse quantization converted signals at the inverse quantization conversion part 200.

The motion compensation part 500 restores image signals by carrying out motion compensation using the motion information, variable length decoded and inverse quantization converted, and received from the variable length decoding and inverse quantization conversion part 100, and the DFD received from, and variable length decoded and, inverse multiplex, inverse quantization, and inverse discrete cosine converted at the variable length decoding and inverse multiplex conversion part 100, the inverse quantization conversion part 200 and the inverse cosine conversion part 300, respectively.

The frame rate conversion part 400 classifies the image signal areas into still areas, motion compensation areas, covered areas and uncovered areas classified by pixels using the motion information, variable length decoded and inverse multiplex, macrobolck type information, and the DFD received from, and variable length decoded and inverse multiplex, inverse quantization, and inverse discrete cosine converted at the variable length decoding and inverse multiplex conversion part 100, inverse quantization conversion part 200, and inverse cosine conversion part 300, respectively, and converts the frame ratios of the image signals received from the motion compensation part 500 according to the classified areas.

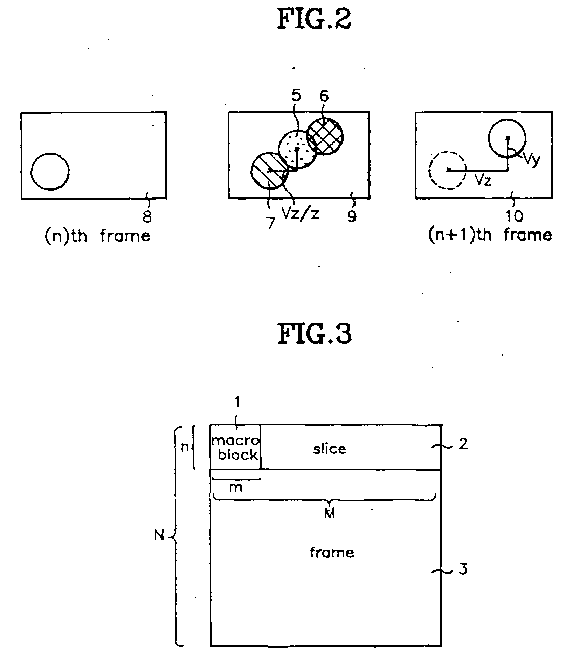

One frame 9 to be subjected to an interpolation is classified into still areas, motion compensation areas, covered areas and uncovered areas by pixels, which classified areas have, as shown in FIG.2, still areas 4 areas having no changes between front and rear frames (n)th and (n+1)th ie., between adjoining two frames 8 and 9, motion compensation areas 5 motion compensation have to be carried out due to existence of motion, covered areas 7 appearing from behind a coverage as the motion part moves and uncovered areas 6 being covered as the motion part moves.

Herein, details of the motion compensation part 500 and the frame rate conversion part 400 are to be explained.

The motion compensation part 500 includes a motion compensator 501 for compensating motion using the motion information, variable length decoded and inverse multiplex converted at the variable length decoding and inverse multiplex conversion part 100, an adder 502 for adding the DFD received from, and variable length decoded and inverse multiplex, inverse quantization and inverse discrete cosine converted at the variable length decoding and inverse multiplex conversion part 100, inverse quantization conversion part 200 and inverse discrete cosine conversion part 300, respectively, and signals received from and motion compensated at the motion compensator 501, and for transmitting the image signals to the frame conversion part 400, and a frame memory 503 for storing image signals received from the adder 502 for the motion compensation of the next frame and for transmitting the stored image signals to the motion compensator 501.

One embodiment of the frame rate conversion part 400 includes a summer 401 for summing up the DFD in macroblock units received from, and variable length decoded and inverse multiplex, inverse quantization and inverse discrete cosine converted at the variable length decoding and inverse multiplex conversion part 100, the inverse quantization conversion part 200 and the inverse discrete cosine conversion part 300, respectively, a latch 402 for temporary storing of the DFD received from the summer 401 in macroblock units, a latch 403 for temporary storing of the motion information received from, and variable length decoded and inverse multiplex converted at the variable length decoding and inverse multiplex conversion part 100 in order to compensate delay at the summer 401, a latch 404 for temporary storing of the macroblock type information received from, and variable length decoded and inverse multiplex converted at the variable length decoding and inverse multiplex converoion part 100 in order to compensate for the delay at the summer 401, and a frame rate converter 405 for converting frame rates by forming one frame through classifying areas by pixels utilizing the image signals received from the motion compensation part 500 and signals received from the latches 402,403 and 404, and carrying out corresponding interpolations according to the result of the classification.

The compressed bit stream applied to the variable length decoding and inverse multiplex conversion part 100 is restored to meaningful signals by undergoing a variable length decoding, and classified into motion information, macroblock type information, quantum conversion coefficient and control parameters by undergoing a inverse multiplex conversion, at the variable length decoding and inverse multiplex conversion part 100, the control parameters transmitted from the variable length decoding and inverse multiplex conversion part 100 to the inverse quantization conversion part 200 is converted into inverse quantization at the inverse quantization conversion part 200 according to the quantum conversion coefficient received from the variable length decoding and inverse multiplex conversion part 100, and the signals converted into inverse quantization is undergone a inverse discrete cosine conversion at the inverse discrete cosine conversion part 300 restoring the DFD based on estimated motion path of image.

Image signals of front one frame stored in the frame memory 503 is undergone a motion compensation at the motion compensator 501 according to the motion information received from the variable length decoding and inverse multiplex conversion part 100, which is, combined with the DFD received from the inverse discrete cosine conversion part 100 at the adder 502, producing image signals which is transmitted to the frame rate converter 405 and stored into the frame memory 503.

The image signals transmitted from the adder 502, being mostly image signals having a frame rate of 25Hz or 30Hz, should be converted into image signals with two times of frame ratio of 50Hz or 60Hz in order to display on a monitor.

To do this,the DFD transmitted from, and undergone a variable length decoding and inverse multiplex, inverse quantization and inverse discrete cosine conversion through the variable length decoding and inverse multiplex conversion part 100, the inverse quantization conversion part 200 and the inverse discrete cosine conversion part 300, respectively, is summed up into macroblock units, and stored in the latch 402, temporarily.

And the motion information transmitted from, and undergone a variable length decoding and inverse multiplex conversion at the variable length decoding and inverse multiplex conversion part 100 is stored in the latch 403, temporarily in order to compensate delay at the summer 401, and the macroblock type information transmitted from, and undergone a variable length decoding and inverse multiplex conversion in the variable length decoding and inverse multiplex conversion part 100 is stored in the latch 404 temporarily in order to compensate delay at the summer 401.

As shown in FIG.3, basic unit for coding is a macroblock 1 which has m ≠ n pixels. And M/m macroblocks makes one slice 2, and one slice has n x M pixels. N/n slice 2 makes one frame 3.
Since one frame has M x N pixels, one frame comes to have (N/n) x(M/m) blocks.

Therefore, to know the rate of change between frames, signals coded and transmitted in macroblock units should be waited until they are piled up to make one frame.

This is the reason why the DFD received from the inverse discrete cosine conversion part 300 should be gathered in macroblock units in the summer 401, and to compensate for the delay of time for the gathering, the latches 403 and 404 are required.

The signals transmitted from the latches 402, 403 and 404 to the frame rate converter 405 is used for classifying into still areas, motion compensation areas, covered areas and uncovered areas at the frame rate converter 405, based on which required interpolation can be carried out at the frame rate conversion part 405 using the image signals received from the motion compensation part 500.

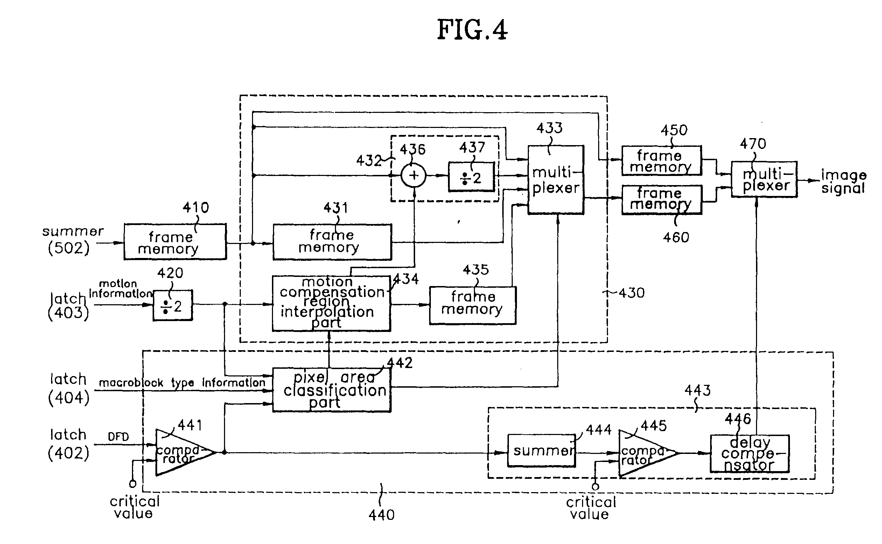

Details of the frame rate converter 405 is to be explained hereinafter, referring to the FIG.4.

As shown in FIG.3, the frame rate converter 405 includes a frame memory 410 for storing image signals received from the motion compensation part 500, a divider 420 for dividing the motion information received from the latch 403 by 2, a interpolation control part 440 for classifying into still areas, motion compensation areas, covered areas and uncovered areas classified by pixels using signals received from the latches 402 and 404 and the divider 420, an interpolation part 430 for carrying out interpolation to complete one frame using image signals received from the frame memory 410 and signals received from the divider 420 under the control of the compensation control part 440, a frame memory 450 for temporary storing of the image signals received from the frame memory 410 to match the synchronization, a frame memory 460 for temporary storing of the image signals received from the interpolation part 430 to match the synchronization, and a multiplexer 470 for selecting and transmitting one of the image signals received from the frame memories 450 and 460 under the control of the compensation control part 440.

Herein, the frame memory 450 and 460 may be removed making the multiplexer 470 to select and transmit one of the signals received from the frame memory 410 and the compensation part 430,directly.

The interpolation control part 440 includes a comparator 441 for comparing the DFD received from the latch 402 to a preset critical value, a pixel area classification part 442 for controlling the interpolation part 430 classifying into still areas, motion compensation areas, covered areas and uncovered areas by pixels using signals received from the divider 420, the latch 404 and the comparator 441, and a scene change detection part 443 for controlling output of the multiplexer 470 detecting changes of scenes using signals received from the comparator 441. The scene change detection part 443 includes a summer 444 for summing signals received from the comparator 441 in frame units, a comparator 445 for comparing the signals received from the summer 444 to a critical value, and a delay compensator 446 for compensating delays by storing signals received from the comparator 445 temporarily, and for controlling the output of the multiplexer 470.

The interpolation part 430 includes a frame memory 431 for storing the image signals received from the frame memory 410, an averaging interpolation part 432 for carrying out interpolation with the average of two frames using the image signals received from the frame memories 410 and 431, a motion compensation region interpolation part 434 for carrying out motion compansation using signals received from the frame memory 431 and the divider 420 under the control of the pixel area classification part 442, a frame memory 435 for storing signals received from the motion compensation region interpolation part 434, and a multiplexer 433 for selecting and transmitting signals received from the frame memories 410, 431 and 435 and the averaging interpolation part 432 under the control of the pixel area classification part 442.

The averaging interpolation part 432 includes an adder 436 for adding the image signals received from the frame memories 410 and 431, and a divider 437 for dividing signals received from the adder 436 by 2.

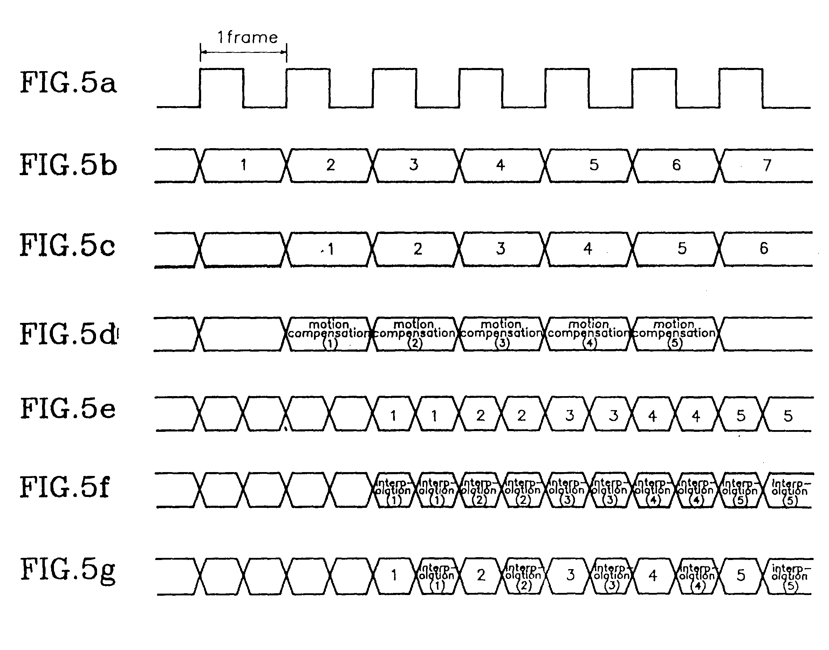

Operation of the frame rate converter 405 having the foregoing is to be explained hereinafter, referring to FIG.5.

The image signals B transmitted from the adder 502 of the motion compensation part 500 is stored into the frame memory 410 in frame units according to the input frame clock A, and the image signals C stored in the frame memory 410 in frame units is stored into the frame memory 431, again. Herein, the image signals stored in the frame memories 410 and 431 in frame units are for adjoining two frames ie., for frames front and rear (n+1)th and (n)th.

The image signals stored in the frame memories 410 and 431 are, added in the adder 436 and divided by 2 in the divider 437, become average values between two frames.

The motion information received from the latch 403 of the frame conversion part 400 is,divided by 2 at the divider 420, become an average value between two frames, and transmitted to the motion compensation region interpolation part 434 and the pixel area classification part 442.

The average motion information received from the divider 420 is used for carrying out motion compensation of the image signals received from the frame memory 431 at the motion compensation region interpolation part 434 under the control of the pixel area classification part 442. The image signals D motion compensated at the motion compensation region interpolation part 434 are, after stored in the frame memory 435 temporarily, transmitted to the multiplexer 433.E.

The image signals transmitted from the frame memories 410, 431 and 435 and the divider 437 of the averaging interpolation part 432 to the multiplexer 433 is selected and transmitted under the control of the pixel area classification part 442.

The process for contolling the multiplexer 433 to select and transmit one of the applied image signals is to be explained hereinafter.

The DFD summed up in macroblock units transmitted from the latch 402 of the frame rate conversion part 400 to the comparator is compared with a critical value preset to determine the areas as motion compensation areas. And the motion information received from the latch 403 of the frame rate conversion part 400 is divided by 2 at the divider 420 in order to compute the average motion information between two frames.

The macroblock type information transmitted from the latch 404 of the frame rate conversion part 400 together with the signals transmitted from the comparator 441 and the divider 420 to the pixel area classification part 442 are used for interpolation after classified into still areas, motion compensation areas, covered areas and uncovered areas by pixels at the pixel area classification 442.

That is, if the DFD in macroblock units transmitted from the latch 402 is greater than the critical value, determining that it is an uncovered area unconditionally at the pixel area classification part 442 irrespective of the macroblock type information, the multiplexer 433 is controlled to transmit a corresponding image signals after selecting the corresponding image signals from the front frame (n)th received from the frame memory 431.

And if the DFD in macroblock units transmitted from the latch 402 is smaller than or same with the critical value and the macroblock type information is appeared to have been coded in intraframe coding, determining that it is an uncovered area at the pixel area classification part 442, the multiplexer 443 is controlled to transmit a corresponding signal after selecting the corresponding image signal from the front frame (n)th received from the frame memory 431.

And if the DFD in macroblock units transmitted from the latch 402 is smaller than or the same with the critical value and the macroblock type information is appeared to have been coded in motion compensated coding, determining that it is covered area or motion compensation area at the pixel area classification part 442, the multiplexer 433 is controlled to transmit a corresponding image signal after selecting the corresponding image signal either from the next frame (n+1)th received from the frame memory 410 or from the motion compensation frame received from the frame memory 435.

And if the DFD in macroblock units transmitted from the latch 402 is smaller than or the same with the critical value and the macroblock type information is appeared to have been coded in non motion compensated intraframe coding, determining that it is a still area, the multiplexer 433 is controlled to transmit an image signal after selecting the image signal from the average value of corresponding pixel from the front and rear frame (n)th and (n+1)th received from the averaging interpolation part 432. In this instant, if corresponding pixel is determined to be a still area at the pixel area classification part 442, the multiplexer 433 is controlled to transmit after selecting from either the front frame (n)th or the rear frame (n+1)th.

The image signals transmitted from the frame memory 410 and the multiplexer 433 are, stored temporarily in the frame memories 450 and 460 respectively to match synchronization, and selected and transmitted from the multiplexer 470 under the control of the scene change detection part 443.G.

The signals transmitted from the comparator 441, summed up at the summer 444 in frame units, compared with a critical value preset to determine the signal to be a scene change at the comparator 445, and delay compensated matching synchronization at the delay compensator 446, controls the multiplexer 470 to select an output.

That is, if the signal received from summer 444 is found to be greater than the critical value as the result of comparison at the comparator 445, determining that the scene has been changed, the multiplexer 470 is controlled to select and transmit an image signal of the next frame (n+1)th received from the frame memory 450. And if the signal received from summer 444 is found to be smaller than or the same with the critical value as the result of comparison at the comparator 445, determining that the scene has not been changed, the multiplexer 470 is controlled to select and transmit the image signals received from the frame memories 450 and 460,alternatively.G.

Then, the multiplexer 470 finally transmits an image signal corresponding to two times of the frame rate of the received image signals to facilitate a display on a monitor.

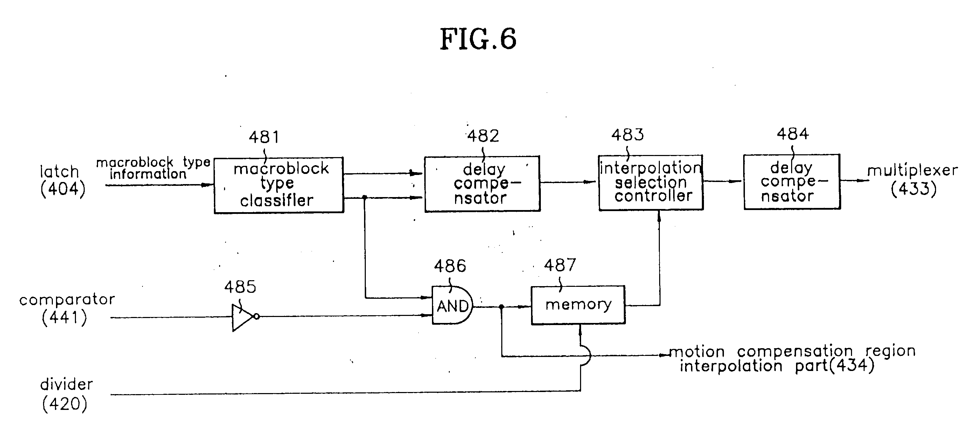

Details of the pixel area classification part 442 of the interpolation control part 440 is to be explained hereinafter, referring to FIG.6.

As shown in FIG.6, the pixel area classification part 442 of the interpolation control part 440 includes a macroblock type classifier 481 for classifying the macroblock type information received from the latch 404 of the frame rate conversion part 400 into intraframe information and motion compensation information, an inverter 485 for inverting signals received from the comparator 441 of the interpolation control part 440, an AND gate 486 for determining a motion compensation area by logic multiplying of the signals received from the inverter 485 and the motion compensation information received from the macroblock type classifier 481, and for transmitting the motion compensation area to the motion compensation region interpolation part 434, a memory 487 for storing the position of the corresponding pixel using signals received from the divider 420 in response to the signal received from the AND gate 486, a delay compensator 482 for compensating delays by storing signals received from the macroblock type classifier 481, an interpolation selection controller 483 for controlling the multiplexer 433 in response to the signals stored in the memory 487 and received from the delay compensator 482, and a delay compensator 484 for compensating delays by storing the signals received from the interpolation selection controller 484 and transmitting the delay compensated signals to the multiplexer 433.

The macroblock type information received from the latch 404 is, after classified into intraframe information and motion compensation information at the macroblock type classifier 481, temporarily stored into the delay compensator 484. In this instant, since the intraframe information and the motion interpolation information classified at and received from the macroblock type classifier 481 show that whether the corresponding pixel has been coded in intraframe coding, motion compensated coding, or non motion compensated intraframe coding, if it is found that the corresponding pixel has been coded in intraframe coding, the pixel is determined to be an uncovered area, if it is found that the corresponding pixel has been coded in motion compensated coding, the pixel is determined to be either covered area or motion compensated area, and if it is found that the corresponding pixel has been coded in non motion compensated intraframe coding, the pixel is determined to be a still area.

In this instant, if the corresponding pixel has been coded in motion compensated coding, in order to classify the corresponding pixel into covered area and motion compensated area, the output of the comparator 485 is utilized, which process is to be explained hereinafter.

The signals received from the comparator 441 is transmitted after inverted at the inverter 485, logic multiplied at the AND gate 486 together with motion compensated information received from the macroblock type classifier 481. The signals received from the AND gate 486, signals showing that the corresponding pixel has been interpolated through a motion compensation, does not actuate the motion compensation region interpolation part 434 in case the signal shows that the corresponding pixel has not been motion compensated, but actuate the motion compensation region interpolation part 434 only in case the signal shows that the corresponding pixel has been motion compensated for the motion compensation of the corresponding.

Data indicating motion compensated position within a frame received from the diveder 420 in response to the signal received from the AND gate 486 is stored in the memory 487.

That is, in case the signal received from the AND gate 486 indicates that the corresponding pixel has been motion compensated, the motion compensated position within a frame is stored into the memory 487 using the motion information divided by 2 received from the divider 420, and in case the signal received from the AND gate 486 indicates that the corresponding pixel has not been motion compensated, the memory 487 is not actuated.

The interpolation selection controller 483 classifies the corresponding pixels into covered areas and motion compensated areas in case the delay compensated signal at the delay compensator 482 shows that the corresponding pixel has been written in motion compensated coding.

That is, in case the corresponding pixel corresponds the motion compensated position stored in the memory 487, determining that the corresponding pixel is a motion compensated area, the interpolation selection controller 483 controls the multiplexer 433 to select and transmit the image signals stored in the frame memory 435 in order to generatio a motion compensated image signals, and in case the corresponding pixel does not corresponds the motion compensated position stored in the memory 487, determining that the corresponding pixel is a covered area, the interpolation selection controller 483 controls the multiplexer 433 to select and transmit the image signals stored in the frame memory 410 in order to select a corresponding image signals from the rear frame (n+1)th.

In another words, the interpolation selection controller 483 transmits signals for controlling the multiplexer 433 based on the determination through classifying into uncovered area, still area, and covered area or motion compensated area based on signals received from the delay compensator 482, and further based on determination through classifying into covered area and motion compensated area based on signals stored in the memory 487, .

That is, the interpolation selection controller 483 controls the multiplexer 433 to select the output of, the divider 437 in order to interpolate with the average of both frames in case the signals received from the delay compensator 482 shows that the corresponding pixel is a still area, the frame memory 435 in order to interpolate through motion compensation in case the signals received from the delay compensator 482 and the memory 487 show that the corresponding pixel is a motion compensated area, the frame memory 410 in order to interpolate using the image signals of rear frame (n+1)th in case the signals received from the delay compensator 482 and the memory 487 show that the corresponding pixel is a covered area, and the frame memory 431 in order to interpolate using the image signals of the front frame (n)th in case the signals received from the delay compensator 482 shows that the corresponding pixel is an uncovered area.

Further, the interpolation selection controller 483 may control the multiplexer 433 either to select the output of the frame memory 431 in order to interpolate using the image signals of the front frame (n)th ,or the output of the frame memory 410 in order to interpolate using the image signals of rear frame (n+1)th in case the signals received from the delay compensator 482 shows that the corresponding pixel is a still area.

The signals received from the interpolation selection controller 483 is, delay compensated stored in the delay compensator 484, and applied to the multiplexer 433 in order to control the multiplexer 433.

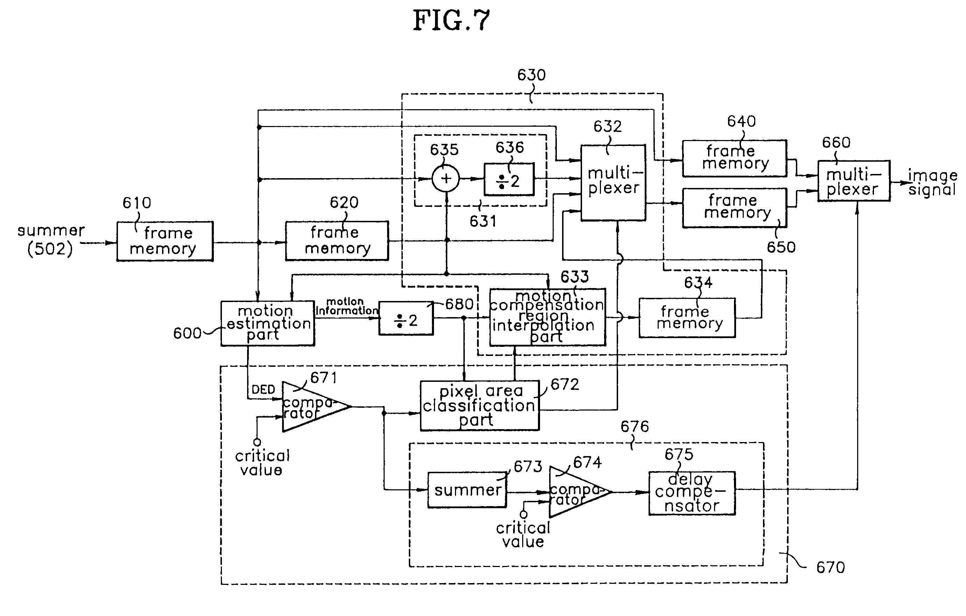

Another embodiment of the frame rate conversion part 400 is to be explained hereinafter, referring to FIG.7.

As shown in FIG.7, another embodiment of the frame rate conversion part 400 includes frame memories 620 and 620 connected in series for storing the image signals in frame units received from the motion compensator 500, a motion estimation part 600 for estimating motion information and DFD using image signals of two adjoining frames received from the frame memories 610 and 620, a divider 680 for dividing the motion information received from the motion estimation part 600 by 2, a interpolation control part 670 for classifying areas by pixels using the motion information received from the motion estimation part 600 and the signals received from the divider 680, a interpolation part 630 for completing one frame by carrying out interpolation using the image signals received from the frame memories 610 and 620 and the signals received from the divider 680 under the control of the interpolation control part 670, a frame memory 640 for storing the image signals received from the frame memory 610 temporarily to match the synchronization, a frame memory 650 for storing the image signals received from the interpolation part 630 temporarily to match the synchronization, and a multiplexer 660 for selecting and transmitting one of the image signals received from the frame memories 640 and 650 under the control of the interpolation control part 670, thereby the frame rates of the image signals received from the motion compensation part 500 can be converted based on areas classified into still areas, motion compensated areas, covered areas, and uncovered areas, classified by pixels through estimation of the motion information and the DFD using the image signals of two adjoining frames received from the motion compensation part 500.

Herein, the frame memory 640 and 650 can be removed permitting the multiplexer 660 to select and transmit one of the signals received from the frame memory 610 and the interpolation part 630, directly.

The interpolation control part 670 includes a comparator 671 for comparing the DFD received from the motion estimation part 600 to a preset critical value, a pixel area classification part 672 for controlling the interpolation part 630 through classifying into still areas, motion compensated areas, covered areas and uncovered areas, classified by pixels using signals received from the divider 680 and the comparator 671, and a scene change detection part 676 for detecting changes of scenes using signals received from the comparator 671 for controlling output of the multiplexer 660.

The scene change detection part 676 includes a summer 673 for summing signals received from the comparator 671 in frame units, a comparator 674 for comparing the signals received from the summer 673, and a delay compensator 675 for compensating delays by storing signals received from the comparator 674 temporarily, and for controlling the output of the multiplexer 660.

The interpolation part 630 includes an averaging interpolation part 631 for carrying out interpolation with the average of both frames using the image signals received from the frame memories 610 and 620, a motion compensation region interpolation part 633 for carrying out motion compansations using signals received from the frame memory 620 and the divider 680 according to the control of the pixel area classification part 672, a frame memory 634 for storing signals received from the motion compensation region interpolation part 633, and a multiplexer 632 for selection of the signals received from the frame memories 610, 620 and 634, and the averaging interpolation part 631 and for transmitting the selected signals according to the control of the pixel area classification part 633.

Operation of another embodiment of the frame rate conversion part having the foregoing is to be explained hereinafter.

The image signals received from the adder 502 of the motion compensation part 500 is stored into the frame memory 610 in frame units, and the image signals stored in the frame memory 610 in frame units is stored into the frame memory 620, again. Herein, the image signals stored in the frame memories 610 and 620 in frame units are for two adjoining frames ie., for frames front and rear (n+1)th and (n)th.

The image signals in frame units transmitted from the frame memories 610 and 620 to the motion estimation part 600 are estimated and detected on motion information and DFD in macroblock units. The motion information transmitted from the motion estimation part 600 is,divided by 2 in the divider 680 into an average motion value between two frames, and transmitted to the motion compensation region interpolation part 634 and the pixel area classification part 672.

The average motion information received from the divider 680 is used for carrying out motion compensation of the image signals received from the frame memory 620 at the motion compensation region interpolation part 633 according to the control of the pixel area classification part 672. The image signals motion compensated at the motion compensation region interpolation part 633 is, after stored in the frame memory 634,temporarily, transmitted to the multiplexer 632.

The image signals stored in the frame mamories 610 and 620 are, added up at the adder 635, and divided by 2 at the divider into an average between frames.

The image signals transmitted from the frame memories 610, 620 and 634 and the divider 636 of the averaging interpolation part 631 to the multiplexer 433 are selected and transmitted under the control of the pixel area classification part 672.

The process for contolling the multiplexer 632 to select and transmit one of the applied image signals is to be explained hereinafter.

The DFD in macroblock units received from the motion estimation part 600 is compared with a critical value preset to determine the areas as motion compensation areas at the comparator 671. And the motion information received from the motion estimation part 600 is divided by 2 at the divider 680 in order to compute the average motion information between two frames.

The signals transmitted from the comparator 671 and the divider 680 to the pixel area classification part 672 are used therein for interpolation through classifying into still areas, motion compensated areas, covered areas and uncovered areas classified by pixels.

That is, if the DFD in macroblock units received from the motion estimation part 600 is greater than the critical value, determining that it is an uncovered area at the pixel area classification part 672, the multiplexer 632 is controlled to select a corresponding image signal from the front frame (n)th received from the frame memory 620 and to transmit the selected corresponding image signal.

And if the DFD in macroblock units transmitted from the motion estimation part 600 is smaller than or the same with the critical value, determining that it is an uncovered area, a motion compensated area, a covered area or a still area at the pixel area classification part 672 depending on the average motion information, the multiplexer 632 is controlled to select a corresponding image signal from the front frame (n)th received from the frame memory 620, a corresponding signal from the motion compensated frame received from the frame memory 633, a corresponding image signal from the rear frame (n+1)th received from the frame memory 610, and the image signals by the average value of the corresponding pixels of the front and rear frames (n)th and (n+1)th, and to transmit the selected image signals.

In another words, the pixel area classification part 672 controls the the multiplexer 632 to interpolate, with the average between two frames when the corresponding pixel is determined to be a still area, through motion compensation when the corresponding pixel is determined to be a motion compensated area, using an image signal of the rear frame (n+1)th when the corresponding pixel is determined to be a covered area, and using image signal of the front frame (n)th when the corresponding pixel is determined to be an uncovered area. In this instant, if corresponding pixel is determined to be a still area at the pixel area classification part 672, the multiplexer 632 is controlled to transmit a corresponding image signal after selecting the corresponding image signal from either the front frame (n)th or the rear frame (n+1)th.

The image signals received from the frame memory 610 and the multiplexer 632 are, stored temporarily in the frame memories 640 and 650 respectively to match synchronization, and selected at and transmitted from the multiplexer 660 under the control of the scene change detection part 676.

The signals received from the comparator 671, summed up at the summer 673 in frame units, compared with a critical value preset to determine to be a scene change at the comparator 674, delay compensated matching synchronization at the delay compensator 675, controls the multiplexer 660 to select an output.

That is, if the signal received from the summer 673 is found to be greater than the critical value as the result of comparison at the comparator 674, determining that the scene has been changed, the multiplexer 660 is controlled to select and transmit an image signal of the rear frame (n+1)th received from the frame memory 640. And if the signal received from the summer 673 is found to be smaller than or the same with the critical value as the result of comparison at the comparator 674, determining that the scene has not been changed, the multiplexer 660 is controlled to select and transmit the image signals received from the frame memories 640 and 650,alternatively.

Then, the multiplexer 660 finally transmits an image signal corresponding to two times of the frame rate of the applied image signals to facilitate a display on a monitor.

At present, since the frame rates or field rates of an HDTV existing worldwide are 50Hz, 60Hz and 59.94Hz, cases in which image signals with 60Hz frame rate should be converted into image signals with 59.94Hz frame rate can happen.

To do this, a frame rate conversion device can be provided which further includes a frame rate conversion part 700 that can convert image signals with 60Hz frame rate received from the frame rate conversion part 400 into image signals with 59.94Hz frame rate.

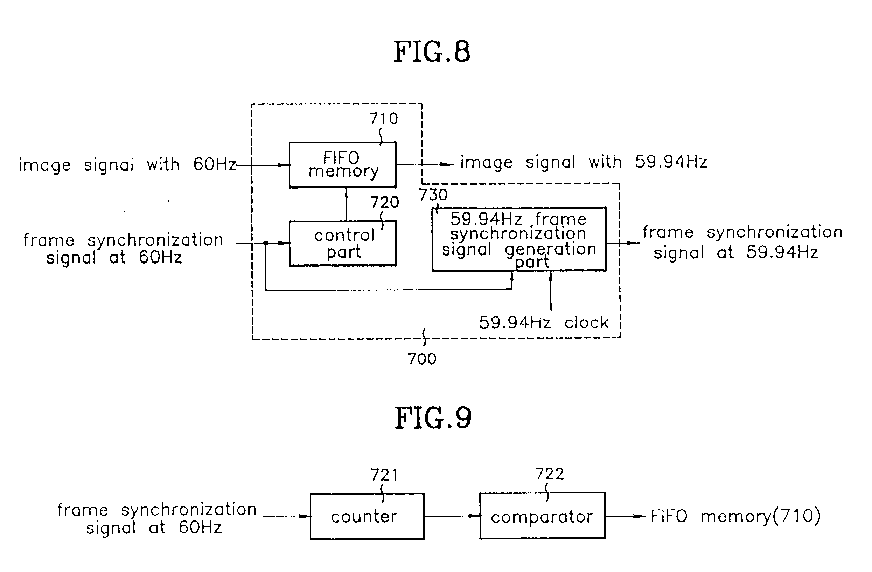

As shown in FIG.8, the frame rate conversion part 700 includes a FIFO memory 710 for storing and transmitting one frame of image signals of the image signals with 60Hz frame rate received from the frame rate conversion part 400, a control part 720 for controlling the FIFO memory 710 using frame synchronization signal at 60 Hz, and a 59.94Hz frame synchronization signal generation part 730 for generating frame synchronization signals at 59.94Hz using 60Hz frame synchronization signals and 59.94Hz clock.

To convert image signals with 60Hz frame rate into image signals with 59.94Hz frame rate, every 1000 frames should be converted into 999 frames, of which the simplest method is to remove every 1000th incoming frame. That is, of the incoming 1000 frames, only 999 frames should be read in abandoning remained one frame. In another words, if, while 1000 frames of image signals with 60 Hz frame rate are coming in, 999 frames are read in leaving the remaining 1000th frame in the FIFO memory 710 when the FIFO memory 710 is reset again, and continues reading and writing, since only 999 frames of the incoming 1000 frames can be resulted to be read and transmitted, making the frame rate 59.94 Hz.

Details of the foregoing process is to be explained hereinafter.

Image signals with 60 Hz frame rate applied to the FIFO memory 710 are stored therein frame by frame, and transmitted therefrom as image signals with 59.94 Hz under the control of the control part 720.

The 60Hz frame synchronization signals, applied to the control part 720, are used to control the FIFO memory 710 to transmit image signals with 59.94Hz frame ratio. That is, the control part 720, receiving 60Hz frame synchronization signals, controls the FIFO memory 710 not to transmit only the image signals corresponding to the 1000th frame of the image signals applied therein by resetting the FIFO memory 710 at 1000th frame synchronization.

In another words, the incoming image signals with 60Hz frame rate is, stored in the FIFO memory 710 sucessively, and transmitted until the image signals corresponding to 999th frame is transmitted under the control of the control part 720, and when the 1000th frame synchronization signal is received, the control part 720 controls the FIFO memory 710 to reset preventing transmission of the image signals corresponding to the last 1000th frame stored in the FIFO memory 710. The FIFO memory 710 with the image signals corresponding to the 1000th frame stored therein, after reset, transmits again starting from the image signals corresponding to the first frame only to the image signals corresponding to the 999th frame.

And, to match the synchronization, the 60Hz frame synchronization signal together with 59.94 Hz clock are applied to the 59.94Hz frame synchronization signal generation part 730, generating 59.94Hz frame synchronization signals.

Details of the control part 720 is to be explained hereinafter, referring to FIG.9.

As shown in FIG.9, the control part 720 includes a counter 721 for counting 60Hz frame synchronization signals applied thereto, and a comparator 722 for comparing the counted value received from the counter 721 to 1000 for controlling the FIFO memory 710. Herein, the counter 721 is provided with a 10 bit counter capable of counting up to 1000.

The 60Hz frame synchronization signal is reset everytime the 1000th frame synchronization signal counted at the counter 721 is applied thereto. The signals transmitted from the counter 721 is compared with 1000, and the result of the comparison is transmitted as the control signals for the FIFO memory 710. That is, if the output of the counter 721 is not 1000, the comparator 722 is controlled to transmit a low level signal to the FIFO memory 710 to carry out writing and reading, and if the output of the counter 721 is 1000, the comparator 722 is controlled to transmit a high level signal to the FIFO memory 710 to reset preventing the FIFO memory 710 from carrying out reading the image signal corresponding to the 1000th frame.

Thus, image signals with 60Hz frame rate can be converted into image signals with 59.94Hz frame rate.

At present, since the frame rates or field rates of an HDTV existing worldwide are 50Hz, 60Hz and 59.94Hz, cases in which image signals with 59.94Hz frame ratio should be converted into image signals with 60Hz frame rate can happen.

To do this, a frame rate conversion device can be provided which further includes a frame rate conversion part 800 that can convert image signals with 59.94Hz frame rate transmitted from the frame ratio conversion part 400 into image signals with 60Hz frame rate.

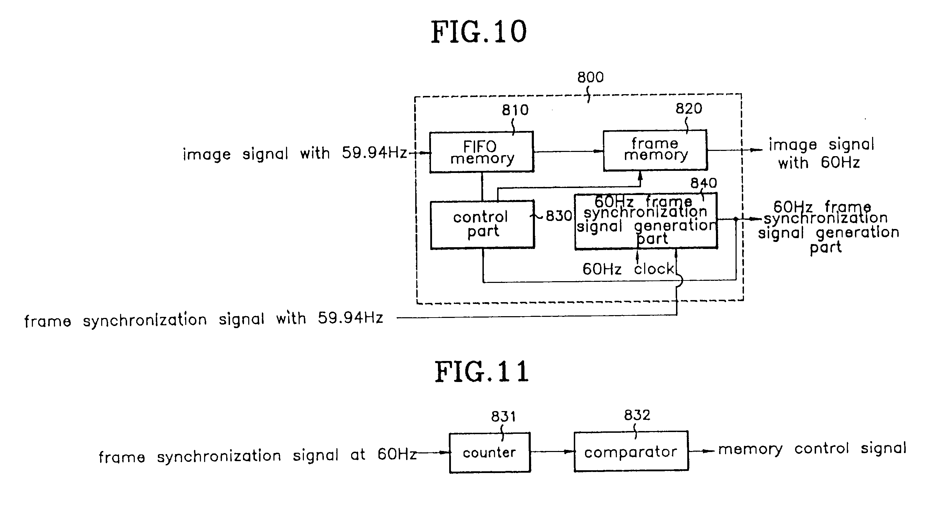

As shown in FIG.10, the frame rate conversion part 800 includes a FIFO memory 810 for storing temporarily and transmitting one frame of image signals of the image signals with 59.94Hz frame rate received from the frame rate conversion part 400, a frame memory 820 for storing one frame of image signals received from the FIFO memory 810 and for transmitting image signals with 60Hz frame rate, a 60Hz frame synchronization signal generation part 840 for generating frame synchronization signals at 60Hz using 59.94Hz frame synchronization signals and 60Hz clock, and a control part 830 for controlling the FIFO memory 810 and the frame memory 820 using frame synchronization signals at 60Hz received from the 60Hz frame synchronization signal generation part 840. Herein, the FIFO memory 810 should be capable of storing image signals corresponding to one frame.

To convert image signals with 59.94Hz frame rate into image signals with 60Hz frame rate, every 999 frames should be converted into 1000 frames, of which the simplest method is to repeat transmitting every 999th incoming frame once more. That is, after completion of reading in the incoming 999 frames, only the 999th frame should be read in once more.

Details of the foregoing process is to be explained hereinafter.

The image signals with 59.94Hz frame rate read and stored in the FIFO memory 810 frame by frame under the control of the control part 830, are written on the frame memory 820 again, and transmitted therefrom as image signals with 60Hz frame rate under the control of the control part 830.

To match synchronization, the 59.94Hz frame synchronization signals and 60Hz clocks applied to the 60Hz frame synchronization signal generation part 840, are transmitted as 60Hz frame synchronization signals therefrom.

The 60Hz frame synchronization signals transmitted from the 60Hz frame synchronization signal generation part 840 to the control part 830, are used to control the FIFO memory 810 and the frame memory 820 to transmit image signals with 60Hz frame rate. That is, the control part 830, receiving 60Hz frame synchronization signals, controls the FIFO memory 810 to read in the image signals corresponding to each frame from each synchronization and,to transmit the read in image signals. And the control part 830, after reading in the image signals corresponding to each of the 999th frame from each of the 999th frame synchronization stored in the FIFO memory 810, controls, for 1/60 second, to hold the FIFO memory 810 reading and the frame memory 820 writing, and to continue the FIFO memory 810 writing and the frame memory 820 reading. Through this operation, it is made possible to prevent the FIFO memory 810 from underflowing ane to permit the frame memory 820 to repeat reading in each of the 999th frame once more after every 999 frames.

Details of the control part 830 is to be explained hereinafter, referring to FIG.11.

As shown in FIG.11, the control part 830 includes a counter 831 for receiving and counting the 60Hz frame synchronization signals transmitted from the 60Hz frame synchronization signal generation part 840, and a comparator 832 for comparing the counted value received from the counter 831 to 999 for controlling the FIFO memory 810 and frame memory 820. Herein, the counter 831 is provided with a 10 bit counter capable of counting up to 1000.

The 60Hz frame synchronization signal received from the 60Hz frame synchronization signal generation part 840 is reset everytime 999th frame synchronization signal counted at the counter 831 is applied thereto. The signals received from the counter 831 is compared with 999 at the comparator 832, and the result of the comparison is applied as control signals to the FIFO memory 810 and the frame memory 820. That is, if the output of the counter 831 is not 999, the signals applied from the comparator 832 controls the FIFO memory 810 and the frame memory 820 to carry out reading and writing according to the frame synchronization signals, and if the output of the counter 831 is 999, the signals applied from the comparator 832, for 1/60 second after the FIFO memory 810 is read in the 999th frame, controls to hold the FIFO memory 810 reading and the frame memory 820 writing, and to continue the FIFO memory 810 writing and the frame memory 820 reading, permitting the frame memory 820 to repeat reading the image signals corresponding to every 999th frame once more.

Thus, image signals with 59.94Hz frame rate can be converted into image signals with 60Hz frame rate.

As has been explained, this invention provides users with advantages of watching natural display picture having good picture quality by carrying out classification of the corresponding pixel areas and subsequent interpolation easily utilizing various informations applied from an image signal decoder.

## Claims

1. A device for converting the frame rate of an image signal comprising:
decoding means (100) for decoding an incoming compressed bit stream, and for performing a classification into motion information, macroblock type (1) information, a quantum coefficient, and control parameters, which classification is performed by carrying out an inverse multiplex operation;
quantization means (200) for inverse quantizing signals outputted from the decoding means (100) according to the quantum coefficient;
conversion means (300) for carrying out an inverse discrete cosine conversion of the inverse quantized signal supplied by the quantization means (200), and thereby generating a displaced frame difference (DFD) based on motion rate estimation;
motion compensation means (500) for decoding image signals using the motion information supplied from the decoding means (100) and the displaced frame difference (DFD) supplied from the conversion means (300); and
first frame rate conversion means (400) for classifying areas (4, 5, 6, 7) by pixels using the motion information, the macroblock type information, and the displaced frame difference (DFD), and for converting the frame rate of the decoded image signals from the motion compensation means (500), which frame rate is converted based on the classified areas (4, 5, 6, 7) by carrying out corresponding interpolations according to the result of the classification.

2. A device as claimed in claim 1, wherein the areas classified by pixels are still areas (4), motion compensation areas (5), covered areas (7) and uncovered areas (6).

3. A device as claimed in claim 1,
wherein the motion compensation means (500) includes,
a motion compensator (501) for compensating motion using the motion information, variable length decoded and inverse multiplex converted,
an adder (502) for adding the displaced frame difference (DFD), variable length decoded and inverse multiplex, inverse quantization and inverse discrete cosine converted, and signals received from and motion compensated at the motion compensator (501), and for transmitting the image signals to the frame conversion means, and a frame memory (503) for storing image signals received from the adder (502), and for transmitting the stored image signals to the motion compensator (501).

4. A device as claimed in claim 1,
wherein the frame rate conversion means (400) includes,
a summer (401) for summing up the displaced frame difference (DFD), variable length decoded and inverse multiplex, inverse quantization and inverse discrete cosine converted, in macroblock units (1),
a first latch (402) for temporary storing the displaced frame difference (DFD) received from the summer (401) in macroblock units (1),
a second latch (403) for temporary storing the motion information, variable length decoded and inverse multiplex converted, in order to compensate for a delay at the summer (401),
a third latch (404) for temporary storing the macroblock type information, and variable length decoded and inverse multiplex converted, in order to compensate for the delay at the summer (401), and
a frame rate converter (405) for receiving the output signals transmitted from the first, second and third latches (402, 403, and 404) and classifying into still areas (4), motion compensation areas (5), covered areas (7) and uncovered areas (6) by pixels, and converting the frame rate using the signals received from the motion compensation means (500).

5. A device as claimed in claim 4, wherein the frame rate converter (405) includes,
a first frame memory (410) for storing image signals received from the motion compensation means (500),
a first divider (420) for dividing the motion information received from the second latch (403) by 2,
an interpolation control means (440) for classifying areas into still areas (4), motion compensation areas (5), covered areas (7) and uncovered areas (6) by pixels using signals received from the first and the third latches (402, 404) and the first divider (420),
an interpolation means (430) for carrying out interpolation to complete one frame using image signals received from the first frame memory (410) and signals received from the first divider (420) under the control of the interpolation control means (440), and
a first multiplexer (470) for selecting and transmitting one of the image signals received from the first frame memory (410) and the interpolation means (430) under the control of the interpolation control means (440).

6. A device as claimed in claim 5, further including a second frame memory (450) for temporary storing the image signals received from the first frame memory (410) to match the synchronization, and a third frame memory (460) for temporary storing the image signals received from the interpolation means (430) to match the synchronization.

7. A device as claimed in claim 5,
wherein the interpolation control means (440) includes,
a first comparator (441) for comparing the displaced frame difference (DFD) received from the first latch (402) to a first preset critical value,
a pixel area classification means (442) for controlling the interpolation means (430) by classifying an area into still areas (4), motion compensation areas (5), covered areas (7) and uncovered areas (6) by pixels using signals received from the first divider (420), the third latch (404) and the first comparator (441), and
a scene change detection means (443) for controlling the output of the first multiplexer (470) through detecting changes of scenes using signals received from the first comparator (441).

8. A device as claimed in claim 7, wherein the scene change detection means (443) includes,
a summer (444) for summing signals received from the first comparator (441) in frame units,
a second comparator (445) for comparing the signals received from the summer (444) to a second preset critical value, and
a first delay compensator (446) for compensating delays by temporarily storing signals received from the second comparator (445), and for controlling the output of the first multiplexer (470).

9. A device as claimed in claim 7, wherein the interpolation means (430) includes,
a second frame memory (431) for storing the image signals received from the first frame memory (410),
an averaging interpolation means (432) for carrying out an interpolation with the average of two frames using the image signals received from the first and second frame memories (410, 431),
a motion compensation region interpolation means (434) for carrying out motion compensation using signals received from the first divider (420) under the control of the pixel area classification means (442),
a third frame memory (435) for storing signals received from the motion compensation region interpolation means (434), and
a second multiplexer (433) for selecting and transmitting signals received from the first, second and third frame memories (410, 431, 435) and the averaging interpolation means (432) under the control of the pixel area classification means (442).

10. A device as claimed in claim 9, wherein the pixels area classification means (442) classifies the area into still areas (4), motion compensation areas (5), covered areas (7) and uncovered areas (6) classified by pixels.

11. A device as claimed in claim 9, wherein the averaging interpolation means (432) includes an adder (436) for adding the image signals received from the first and second frame memories (410, 431) and a second divider (437) for dividing signals received from the adder (436) by 2.

12. A device as claimed in claim 10, wherein the pixel area classification means (442) includes,
a macroblock type classifier (481) for classifying the macroblock type information received from the third latch (404) into intraframe information and motion compensation information,
an inverter (485) for inverting signals received from the first comparator (441),
an AND gate (486) for determining a motion compensation area by logic multiplying of the signals received from the inverter (485) and the motion compensation information received from the macroblock type classifier (481), and for transmitting the motion compensation area to the motion compensation region interpolation means (434),
a memory (487) for storing the position of the corresponding pixel using signals received from the first divider (420) in response to the signal received from the AND gate (486),
a second delay compensator (482) for compensating delays by storing signals received from the macroblock type classifier (481),
an interpolation selection controller (483) for controlling the second multiplexer (433) in response to the signals stored in the memory (487) and the signals received from the second delay compensator (482), and
a third delay compensator (484) for compensating delays by storing the signals received from the interpolation selection controller (483) and transmitting the delay compensated signals to the second multiplexer (433).

13. A device as claimed in claim 12, wherein the interpolation selection controller (483) controls the second multiplexer (433) to interpolate with the average of both frames in case the signals received from the second delay compensator (482) shows that the corresponding pixel is a still area (4), to interpolate through motion compensation in case the signals received from the second delay compensator (482) and the memory (487) show that the corresponding pixel is a motion compensation area (5), to interpolate using the image signals of a rear frame or (n+1)th frame in case the signals received from the second delay compensator (482) and the memory (487) show that the corresponding pixel is a covered area (7), and to interpolate using the image signals of the front frame or (n)th frame in case the signals received from the second delay compensator (482) show that the corresponding pixel is an uncovered area (6).

14. A device as claimed in claim 13, wherein the interpolation selection controller (483) controls the second multiplexer (433) to interpolate using the image signals of the front frame in case the signals received from the second delay compensator (482) show that the corresponding pixel is a still area (4).

15. A device as claimed in claim 13, wherein the interpolation selection controller (483) controls the second multiplexer (433) to interpolate using the image signals of the rear frame in case the signals received from the second delay compensator (482) show that the corresponding pixel is a still area (4).

16. A device as claimed in claim 1, wherein the first frame rate conversion means (400) classifies the area into still areas (4), motion compensation areas (5), covered areas (7) and uncovered areas (6) by pixels by estimating the motion information and the displaced frame difference (DFD) using image signals of two adjoining frames received from the motion compensation means (500), and converts the frame rate of image signals received from the motion compensation means (500) according to the classified areas.

17. A device as claimed in claim 16, wherein the areas classified by pixels are still areas (4), motion compensation areas (5), covered areas (7) and uncovered areas (6).

18. A device as claimed in claim 17, wherein the frame rate conversion means (400) includes,
a first and a second frame memories (610, 620) connected in series for storing the image signals in frame units received from the motion compensator (500),
a motion estimation means (600) for estimating motion information and displaced frame difference (DFD) using image signals of two adjoining frames received from the first and the second frame memories (610, 620),
a first divider (680) for dividing the motion information received from the motion estimation means (600) by 2,
an interpolation control means (670) for classifying areas by pixels using the motion information received from the motion estimation means (600) and the signals received from the first divider (680),
an interpolation means (630) for completing one frame by carrying out interpolation using the image signals received from the first and the second frame memories (610, 620) and the signals received from the first divider (680) under the control of the interpolation control means (670), and
a first multiplexer (660) for selecting and transmitting one of the image signals received from the first frame memory (610) and the interpolation means (630) under the control of the interpolation control means (670).

19. A device as claimed in claim 18, further including a third frame memory (640) for temporary storing of the image signals received from the first frame memory (610) to match the synchronization, and a fourth frame memory (650) for temporary storing of the image signals received from the interpolation means (630) to match the synchronization.

20. A device as claimed in claim 18, wherein the interpolation control means (670) includes,
a first comparator (671) for comparing the displaced frame difference (DFD) received from the motion estimation means to a first critical value,
a pixel area classification means (672) for controlling the interpolation means (630) through classifying the areas into still areas (4), motion compensation areas (5), covered areas (7) and uncovered areas (6), by pixels using signals received from the first divider (680) and the comparator (671), and
a scene change detection means (676) for detecting changes of scenes using signals received from the first comparator (671) for controlling output of the first multiplexer.

21. A device as claimed in claim 20, wherein the scene change detection means (676) includes,
a summer (673) for summing signals received from the first comparator (671) in frame units,
a second comparator (674) for comparing the signals received from the summer (673) to a second preset critical value, and
a first delay compensator (675) for compensating delays by temporarily storing signals received from the second comparator (674), and for controlling the output of the first multiplexer (660).

22. A device as claimed in claim 20, wherein the interpolation means (630) includes,
an averaging interpolation means (631) for carrying out an interpolation with the average of two frames using the image signals received from the first and second frame memories (610, 620),
a motion compensation region interpolation means (633) for carrying out motion compensation using signals received from the second frame memory (620) and the second divider (680) under the control of the pixel area classification means (672),
a fourth frame memory (634) for storing signals received from the motion compensation region interpolation means (633), and
a second multiplexer (632) for selecting and transmitting signals, received from the first, second and third frame memories (610, 620, 634) and the averaging interpolation means (631) under the control of the pixel area classification means (672).

23. A device as claimed in claim 22, wherein the pixel area classification means (672) classifies the areas into still areas (4), motion compensation areas (5), covered areas (7) and uncovered areas (6) classified by pixels.

24. A device as claimed in claim 22, wherein the averaging interpolation means (631) includes an adder (635) for adding the image signals received from the first and second frame memories (610, 620) and a second divider (636) for dividing signals received from the adder (635) by 2.

25. A device as claimed in claim 23, wherein the pixel area classification means (672) controls the second multiplexer (632) to interpolate with the average of both frames in case the corresponding pixel is determined to be a still area (4), to interpolate through motion compensation in case the corresponding pixel is determined to be a motion compensation area (5), to interpolate using the image signals of a rear frame in case the corresponding pixel is determined to be a covered area (7), and to interpolate using the image signals of a front frame in case the corresponding pixel is determined to be an uncovered area (6).

26. A device as claimed in claim 25, wherein the pixel area classification means (672) controls the second multiplexer (632) to interpolate using the image signals of the front frame in case the corresponding pixel is determined to be a still area (4) .

27. A device as claimed in claim 25, wherein the pixel area classification means (672) controls the second multiplexer (632) to interpolate using the image signals of the rear frame in case the corresponding pixel is determined to be a still area (4).

28. A device as claimed in claim 1, further including a second frame rate conversion means (700) for converting image signals with a 60 Hz frame rate received from the first frame rate conversion means (400) into image signals with a 59.94 Hz frame rate.

29. A device as claimed in claim 28, wherein the second frame rate conversion means (700) includes,
a FIFO memory (710) for storing and transmitting one frame of image signals of the image signals with the 60 Hz frame rate received from the first frame rate conversion means,
a control means (720) for controlling the FIFO memory (710) using a frame synchronization signal at 60 Hz, and
a 59.94 Hz frame synchronization signal generation means (730) for generating frame synchronization signals at 59.94 Hz using a 60 Hz frame synchronization signal and a 59.94 Hz clock.

30. A device as claimed in claim 29, wherein the control means (720) includes,
a counter (721) for counting the 60 Hz frame synchronization signals applied thereto, and
a comparator (722) for comparing the counted value received from the counter (721) to 1000 for controlling the FIFO memory (710).

31. A device as claimed in claim 30, wherein the counter (721) is a 10 bit counter.

32. A device as claimed in claim 1, further including a second frame rate conversion means (800) for converting image signals with a 59.94 Hz frame rate received from the first frame rate conversion means (400) into image signals with a 60 Hz frame rate.

33. A device as claimed in claim 32, wherein the second frame rate conversion means (800) includes,
a FIFO memory (810) for storing temporarily and transmitting one frame of image signals of the image signals with the 59.94 Hz frame rate received from the first frame rate conversion means (400),
a frame memory (820) for storing one frame of image signals received from the FIFO memory (810) and for transmitting image signals at the 60 Hz frame rate,
a 60 Hz frame synchronization signal generation means (840) for generating frame synchronization signals at 60 Hz using a 59.94 Hz frame synchronization signal and a 60 Hz clock, and
a control means (830) for controlling the FIFO memory (810) and the frame memory (820) using frame synchronization signals at 60 Hz received from the 60 Hz frame synchronization signal generation means (840).

34. A device as claimed in claim 33, wherein the control means (830) includes a counter (831) for receiving and counting the 60 Hz frame synchronization signals transmitted from the 60 Hz frame synchronization signal generation means (840), and a comparator (832) for comparing the counted value received from the counter (831) to 999 for controlling the FIFO memory (810) and the frame memory (820).

35. A device as claimed in claim 34, wherein the counter (831) is a 10 bit counter.

## Patentansprüche

1. Einrichtung zum Umsetzen der Bildrate eines Bild/Rahmensignals, enthaltend:
eine Dekodiervorrichtung (100) zum Dekodieren eines ankommenden komprimierten Bitstroms und zum Durchführen einer Klassifikation in Bewegungsinformation, Information vom Makroblocktyp (1), einem Quantisierungskoeffizienten, sowie von Steuerparameten, derart, dass die Klassifikation durch Ausführen eines umgekehrten Multiplexbetriebs durchgeführt wird;
eine Quantisiervorrichtung (200) für inverse Quantisierungssignale, die von der Dekodiervorrichtung (100) gemäss dem Quantenkoeffizienten bzw. Quantifizierungskoeffizienten ausgegeben wird;
eine diskrete Umsetzvorrichtung (300) zum Ausführen einer inversen Cosinustransformation für das inverse quantisierte Signal, das durch die Quantisierungsvorrichtung (200) zugeführt wird und demnach zum Erzeugen einer Bildversatzdifferenz (displaced frame difference, DFD) auf der Grundlage einer Bewegungsratenschätzung;
eine Bewegungskompensationsvorrichtung (500) zum Dekodieren von Bildsignalen unter Verwendung der von der Dekodiervorrichtung (100) zugeführten Bewegungsinformation und der von der Umsetzvorrichtung (300) zugeführten Bildverversatzdifferenz (DFD); und
eine erste Bildraten-Umsetzvorrichtung (400) zum Klassifizieren von Bereichen (4, 5, 6, 7) durch Pixel unter Verwendung der Bewegungsinformation, der Makroblocktyp-Information und der Bildversatzdifferenz (DFD), sowie zum Umsetzen der Bildrate der dekodierten Bildsignale von der Bewegungskompensationsvorrichtung (500) derart, dass die Bildrate auf der Grundlage der klassifizierten Bereiche (4, 5, 6, 7) umgesetzt ist, durch Ausführen entsprechender Interpolationen gemäss dem Klassifizierungsergebnis.

2. Einrichtung nach Anspruch 1, dadurch gekennzeichnet, dass die durch Pixel klassifizierten Bereiche Bereiche ohne Bewegung (4), Bereiche mit Bewegungskompensationen (5), abgedeckte Bereiche (7) und nicht abgedeckte Bereiche (6) sind.

3. Einrichtung nach Anspruch 1, dadurch gekennzeichnet, dass die Bewegungskompensationsvorrichtung (500) enthält:
einen Bewegungskompensator (501) zum Kompensieren der Bewegung unter Verwendung der Bewegungsinformation, mit Dekodierung mit variabler Länge und inverser Multiplexumsetzung,
einen Addierer (502) zum Addieren der Bildversatzdifferenz (DFD), nach Dekodieren mit variabler Länge und inversem Multiplexen, inversem Quantisieren und inverser diskreter Cosinusumsetzung, sowie der Signale, die bei dem Bewegungskompensator (501) empfangen und
bewegungskompensiert werden, sowie zum Übertragen der Bildsignale zu der Bildumsetzvorrichtung, und einen Bildspeicher (503) zum Speichern der von dem Addierer (502) empfangenen Bildsignale zum Übertragen der gespeicherten Bildsignale an den Bewegungskompensator (501).

4. Einrichtung nach Anspruch 1, dadurch gekennzeichnet, dass die Bildraten-Umsetzvorrichtung (400) enthält:
einen Summierer (401) zum Aufsummieren der Bildversatzdifferenz (DFD) nach Dekodieren mit variabler Länge und inversen Multiplexen, inversem Quantisieren und inverser diskreter Cosinusumsetzung in Makroblockeinheiten (1),
eine erste Latcheinheit (402) zum zeitweisen Speichern der Bildversatzdifferenz (DFD), die von dem Summierer (401) in Form von Makroblockeinheiten (1) empfangen wird,
eine zweite Latcheinheit (403) zum zeitweisen Speichern der Bewegungsinformation nach Dekodieren mit variabler Länge und inversem Multiplexumsetzen zum Kompensieren einer Verzögerung bei dem Summierer (401),
eine dritte Latcheinheit (404) zum zeitweisen Speichern der Information vom Makroblocktyp, bei Dekodieren mit variabler Länge und inverser Multiplexumsetzung, zum Kompensieren der Verzögerung bei dem Summierer (401), und
einen Bildratenumsetzer (405) zum Empfangen der Ausgangssignale, die von der ersten, zweiten und dritten Latcheinheit (402, 403 und 404) empfangen werden und zum Klassifizieren in Bereiche ohne Bewegung (4), Bewegungskompensationsbereiche (5), abgedeckte Bereiche (7) und nicht abgedeckte Bereiche (6) anhand von Pixeln, und zum Umsetzen der Bildrate unter Verwendung der Signale, die von der Bewegungskompensationsvorrichtung (500) empfangen werden.

5. Einrichtung nach Anspruch 4, dadurch gekennzeichnet, dass der Bildratenumsetzer (405) enthält:
einen ersten Bildspeicher (410) zum Speichern von Bildsignalen, die von der Bewegungskompensationsvorrichtung (500) empfangen werden,
einen ersten Teiler (420) zum Teilen der von der zweiten Latchvorrichtung (403) empfangenen Bewegungsinformation durch den Wert 2,
eine Interpolationssteuervorrichtung (440) zum Klassifizieren von Bereichen in Bereiche ohne Bewegung (4), Bewegungskompensationsbereiche (5), abgedeckte Bereiche (7) und nicht abgedeckte Bereiche (6) durch Pixel unter Verwendung der Signale, die von der ersten und der dritten Latcheinheit (402, 404) und von dem ersten Teiler (420) empfangen werden,
eine Interpolationsvorrichtung (430) zum Ausführen einer Interpolation zum Vervollständigen eines Bilds unter Verwendung von Bildsignalen, die von dem ersten Bildspeicher (410) empfangen werden, sowie von Signalen, die von dem zweiten Teiler (420) empfangen werden, unter Steuerung durch die Interpolationssteuervorrichtung (440), und
einen ersten Multiplexer (470) zum Auswählen und Senden eines der Bildsignale, die von dem ersten Rahmenspeicher (410) und der Interpolationsvorrichtung (430) empfangen werden, unter Steuerung durch die Interpolationssteuervorrichtung (440).

6. Einrichtung nach Anspruch 5, dadurch gekennzeichnet, dass sie ferner einen zweiten Bildspeicher (450) enthält, zum zeitweisen Speichern der von dem ersten Bildspeicher (410) empfangenen Bildsignale für den Abgleich der Synchronisation, sowie einen dritten Bildspeicher (460) zum zeitweisen Speichern der von der Interpolationsvorrichtung (430) empfangenen Bildsignale zum Abgleichen der Synchronisation.

7. Einrichtung nach Anspruch 5, dadurch gekennzeichnet, dass die Interpolationsvorrichtung (440) enthält:
einen ersten Komparator (441) zum Vergleichen der von der ersten Latcheinheit (402) empfangenen Bildversatzdifferenz (DFD), mit einem ersten voreingestellten kritischen Wert,
eine Pixelbereich-Klassifikationsvorrichtung (442) zum Steuern der Interpolationsvorrichtung (430) durch Klassifizieren eines Bereichs gemäss Bereichen ohne Bewegen (4), Bewegungskompensationsbereiche (5), abgedeckte Bereiche (7) und nicht abgedeckte Bereiche (6) durch Pixel unter Verwendung der von dem ersten Teiler (420), der dritten Latcheinheit (404) und dem ersten Komparator (441) empfangenen Signale, und
eine Szenenänderungs-Detektionsvorrichtung (443) zum Steuern des Ausgangs des ersten Multiplexers (470) durch Detektion der Änderungen der Szene unter Verwendung der von dem ersten Komparator (441) empfangenen Signale.

8. Einrichtung nach Anspruch 7, dadurch gekennzeichnet, dass die Szenenänderungs-Detektionsvorrichtung (443) enthält:
einen Summierer (444) zum Summieren der von dem ersten Komparator (441) empfangenen Signale in Bildeinheiten,
einen zweiten Komparator (445) zum Vergleichen der von dem Summierer (444) empfangenen Signale mit einem zweiten voreingestellten kritischen Wert, und
einen ersten Verzögerungskompensator (446) zum Kompensieren der Verzögerung durch zeitweises Speichern der von dem zweiten Komparator (445) empfangenen Signale und zum Steuern des Ausgangs des ersten Multiplexers (470).

9. Einrichtung nach Anspruch 7, dadurch gekennzeichnet, dass die Interpolationsvorrichtung (430) enthält:
einen zweiten Bildspeicher (431) zum Speichern der von dem ersten Bildspeicher (410) empfangenen Bildsignale,
eine Mittelungs-Interpolationsvorrichtung (432) zum Ausführen einer Interpolation mit dem Durchschnitt zweier Bilder unter Verwendung der von dem ersten und zweiten Bildspeicher (410, 431) empfangenen Bildsignale,
eine Bewegungskompensationsgebiets-Interpolationsvorrichtung (434) zum Ausführen einer Bewegungskompensation unter Verwendung der von dem ersten Teiler (420) unter der Steuerung der Pixelbereichs-Klassifikationsvorrichtung (442) empfangenen Signale,
einen dritten Bildspeicher (435) zum Speichern der von der Bewegungskompensationsgebiets-Interpolationsvorrichtung (434) empfangenen Signale, und
einen zweiten Multiplexer (443) zum Auswählen und Senden der von dem ersten, zweiten und dritten Bildspeicher (410, 431, 435) und der Mittelungsinterpolationsvorrichtung (432) unter Steuerung der Pixelbereichs-Klassifikationsvorrichtung (442) empfangenen Signale.

10. Einrichtung nach Anspruch 9, dadurch gekennzeichnet, dass die Pixelbereichs-Klassifikationsvorrichtung (442) den Bereich in Bereiche ohne Bewegung (4), Bewegungskompensationsbereiche (5) abgedeckte Bereiche (7) und nicht abgedeckte Bereiche (6) durch Pixel klassifiziert.

11. Einrichtung nach Anspruch 9, dadurch gekennzeichnet, dass die Mittlungsinterpolationsvorrichtung (432) einen Addierer (436) zum Addieren der von dem ersten und zweiten Bildspeicher (410, 431) empfangenen Signale enthält, sowie einen zweiten Teiler (437) zum Teilen der von dem Addierer (436) empfangenen Signale durch den Wert 2.

12. Einrichtung nach Anspruch 10, dadurch gekennzeichnet, dass die Pixelbereichs-Klassifikationsvorrichtung (442) enthält:
einen Klassifizierer für den Makroblocktyp (481) zum Klassifizieren der Information vom Makroblocktyp, die von der dritten Latcheinheit (404) empfangen wird, in Zwischenbildinformation und Bewegungskompensationsinformation,
einen Inverter (485) zum Invertieren der von dem ersten Komparator (441) empfangenen Signale, und
ein UND-Gatter (486) zum Bestimmen eines Bewegungskompensationsbereichs durch logisches Multiplizieren der von dem Inverter (485) empfangenen Signale und der von dem Klassifizierer für den Makroblocktyp (481) empfangenen Bewegungskompensationsinformation und zum Senden des Bewegungskompensationsbereichs an die Bewegungskompensationsgebiets-Interpolationsvorrichtung (434),
einen Speicher (487) zum Speichern der Position des zugeordneten Pixels unter Verwendung der von dem ersten Teiler (420) empfangenen Signale in Ansprechen auf das von dem UND-Gatter (486) empfangene Signal,
einen zweiten Verzögerungskompensator (482) zum Kompensieren der Verzögerung durch das Speichern von Signalen, die von dem Klassifizierer für den Makroblocktyp (481) empfangen werden,
einen Interpolationsauswahlcontroller (483) zum Steuern des zweiten Multiplexers (433) in Ansprechen auf die in dem Speicher (487) gespeicherten Signale und die von dem zweiten Verzögerungskompensator (482) empfangenen Signale, und
einen dritten Verzögerungskompensator (484) zum Kompensieren der Verzögerung durch Speichern des von dem Interpolationsauswahlcontroller (483) empfangenen Signale und zum Übertragen der verzögerungskompensierten Signale an den zweiten Multiplexer (433).

13. Einrichtung nach Anspruch 12, dadurch gekennzeichnet, dass der Interpolationsauswahlcontroller (483) den zweiten Multiplexer (433) steuert, und zwar zum Interpolieren mit dem Durchschnitt beider Bilder, in dem Fall, dass die von dem zweiten Verzögerungskompensator (482) empfangenen Signale zeigen, dass das entsprechende Pixel ein Bereich (4) ohne Bewegung ist, ferner zum Interpolieren mit Bewegungskompensation in dem Fall, dass die von dem zweiten Verzögerungskompensator (482) und dem Speicher (487) empfangenen Signale anzeigen, dass das zugeordnete Pixel in einem Bereich mit Bewegungskompensation (5) liegt, ferner zum Interpolieren unter Verwendung der Bildsignale eines Rückbilds oder (n+1)-ten ersten Bilds in dem Fall, dass die von dem zweiten Verzögerungskompensator (482) und dem Speicher (487) empfangenen Signale zeigen, dass das zugeordnete Pixel in einem abgedeckten Bereich (7) liegen, sowie zum Interpolieren unter Verwendung der Signale des Vorderbilds oder den n-ten Bilds in dem Fall, dass die von dem zweiten Verzögerungskompensator (482) empfangenen Signale zeigen, dass das zugeordnete Pixel in einem nicht abgedeckten Bereich (6) liegt.

14. Einrichtung nach Anspruch 13, dadurch gekennzeichnet, dass der Interpolationsauswahlcontroller (483) den zweiten Multiplexer (433) steuert, und zwar zum Interpolieren unter Verwendung der Bildsignale von dem Vorderbild in dem Fall, dass die von dem zweiten Verzögerungskompensator (482) empfangenen Signale zeigen, dass das zugeordnete Pixel in einem Bereich ohne Bewegung (4) liegt.

15. Einrichtung nach Anspruch 13, dadurch gekennzeichnet, dass der Interpolationsauswahlcontroller (483) den zweiten Multiplexer (433) steuert, zum Interpolieren unter Verwendung der Bildsignale von dem Rückbild in dem Fall, dass die von dem zweiten Verzögerungskompensator (482) empfangenen Signale zeigen, dass das zugeordnete Pixel in einem Bereich ohne Bewegung (4) liegt.

16. Einrichtung nach Anspruch 1, dadurch gekennzeichnet, dass die erste Bildraten-Umsetzvorrichtung (400) den Bereich klassifiziert in Bereiche ohne Bewegung bzw. Standbereiche (4), Bewegungskompensationsbereichen (5), abgedeckte Bereiche (7) und in nicht abgedeckte Bereiche (6), durch Pixel, durch Schätzen der Bewegungsinformation und der Bildversatzdifferenz (DFD) unter Verwendung der Bildsignale zweier angrenzender Bildrahmen, die von der Bewegungskompensationsvorrichtung (500) empfangen werden, und dass sie die Bildrate der von der Bewegungskompensationsvorrichtung (500) empfangenen Bildsignale gemäss den klassifizierten Bereichen umsetzt.

17. Einrichtung nach Anspruch 16, dadurch gekennzeichnet, dass die gemäss der Pixel klassifizierten Bereiche Bereiche ohne Bewegung (4) sind, sowie Bewegungskompensationsbereiche (5), abgedeckte Bereiche (7) und nicht abgedeckte Bereiche (6).

18. Einrichtung nach Anspruch 17, dadurch gekennzeichnet, dass die Bildraten-Umsetzvorrichtung (400) enthält:
einen ersten und einen zweiten Bildspeicher (610, 620), die in Serie zum Speichern der Bildsignale in Bildeinheiten, wie sie von dem Bewegungskompensator (500) empfangen werden, angeschlossen sind,
eine Bewegungsschätzvorrichtung (600) zum Schätzen der Bewegungsinformation und der Bildversatzdifferenz (DFD) unter Verwendung der Bildsignale zweier angrenzender Rahmen, die von dem ersten und dem zweiten Bildspeicher (610, 620) empfangen werden,
einen ersten Teiler (680) zum Teilen der von der Bewegungsschätzvorrichtung (600) empfangenen Bewegungsinformation durch den Wert 2,
eine Interpolationssteuervorrichtung (670) zum Klassifizieren der Bereiche durch Pixel unter Verwendung der von der Bewegungsschätzvorrichtung (600) empfangenen Bewegungsinformation und der von dem ersten Teiler (680) empfangenen Signale,
eine Interpolationsvorrichtung (630) zum Vervollständigen eines Bilds durch Ausführen einer Interpolation unter Verwendung der von dem ersten und zweiten Bildspeicher (610, 620) empfangenen Signale und der von dem ersten Teiler (680) empfangenen Signale unter Steuerung der Interpolationssteuervorrichtung (670), und
einen ersten Multiplexer (660) zum Auswählen und Senden eines der von dem ersten Bildspeicher (610) und der Interpolationsvorrichtung (630) empfangenen Signale unter Steuerung durch die Interpolationssteuervorrichtung (670).

19. Einrichtung nach Anspruch 18, dadurch gekennzeichnet, dass sie ferner einen dritten Bildspeicher (640) enthält, zum zeitweisen Speichern der von dem ersten Bildspeicher (610) empfangenen Signale für ein Abstimmen der Synchronisation, sowie einen vierten Bildspeicher (650) zum zeitweisen Speichern der von der Interpolationsvorrichtung (630) empfangenen Bildsignale zum Abstimmen der Synchronisation.

20. Einrichtung nach Anspruch 18, dadurch gekennzeichnet, dass die Interpolationssteuervorrichtung (670) enthält:
einen ersten Komparator (671) zum Vergleichen der von der Bewegungsschätzvorrichtung empfangenen Bildversatzdifferenz (DFD) mit einem ersten kritischen Wert,
eine Pixelbereichs-Klassifikationsvorrichtung (672) zum Steuern der Interpolationsvorrichtung (630) durch Klassifizieren der Bereiche in Bereiche ohne Bewegung (4), in Bewegungskompensationsbereiche (5), in abgedeckte Bereiche (7) und nicht abgedeckte Bereiche (6), durch Pixel, unter Verwendung der von dem ersten Teiler (680) und dem Komparator (671) empfangenen Signale, und
eine Szenenänderungs-Detektionsvorrichtung (676) zum Detektieren von Änderungen der Szenen unter Verwendung der von dem ersten Komparator (671) empfangenen Signale zum Steuern des Ausgangs des ersten Multiplexers.

21. Einrichtung nach Anspruch 20, dadurch gekennzeichnet, dass die Szenenänderungs-Detektionsvorrichtung (676) enthält:
einen Summierer (673) zum Summieren der von dem ersten Komparator (671) empfangenen Signale in Bildeinheiten,
einen zweiten Komparator (676) zum Vergleichen der von dem Summierer (673) empfangenen Signale mit einem zweiten voreingestellten kritischen Wert, und
einen ersten Verzögerungskompensator (675) zum Kompensieren der Verzögerungen durch zeitweises Speichern der von dem zweiten Komparator (674) empfangenen Signale und zum Steuern des Ausgangs des ersten Multiplexers (660).

22. Einrichtung nach Anspruch 20, dadurch gekennzeichnet, dass die Interpolationsvorrichtung (630) enthält:
eine Mittlungsinterpolationsvorrichtung (631) zum Ausführen einer Interpolation mit dem Mittel zweier Bilder unter Verwendung der von dem ersten und zweiten Bildspeicher (610, 620) empfangenen Bildsignale,
eine Kompensationsbewegungsgebiets-Interpolationsvorrichtung (633) zum Ausführen einer Bewegungskompensation unter Verwendung der von dem zweiten Bildspeicher (620) und dem zweiten Teiler (680) empfangenen Signale unter Steuerung durch die Pixelbereichs-Klassifikationsvorrichtung (672),
einen vierten Bildspeicher (634) zum Speichern der von der Bewegungskompensationsgebiets-Interpolationsvorrichtung (633) empfangenen Signale, und
einen zweiten Multiplexer (632) zum Auswählen und Senden von Signalen, die von dem ersten, zweiten und dritten Bildspeicher (610, 620, 634) und der Mittlungsinterpolationsvorrichtung (631) empfangen werden, unter der Steuerung durch die Pixelbereichs-Klassifikationsvorrichtung (672).

23. Einrichtung nach Anspruch 22, dadurch gekennzeichnet, dass die Pixelbereichs-Klassifikationsvorrichtung (672) die Bereiche klassifiziert in Bereiche ohne Bewegung (4), Bewegungskompensationsbereiche (5), abgedeckte Bereiche (7) und nicht abgedeckte Bereiche (6), klassifiziert durch die Pixel.

24. Einrichtung nach Anspruch 22, dadurch gekennzeichnet, dass die Mittlungsinterpolationsvorrichtung (631) einen Addierer (635) zum Addieren der von dem ersten und zweiten Bildspeicher (610, 620) empfangenen Bildsignale enthält, sowie einen zweiten Teiler (636) zum Teilen der von dem Addierer (635) empfangen Signale durch den Wert 2.

25. Einrichtung nach Anspruch 23, dadurch gekennzeichnet, dass die Pixelbereichs-Klassifikationsvorrichtung (672) den zweiten Multiplexer (632) steuert, zum Interpolieren mit dem Durchschnitt zweier Bilder in dem Fall, dass für das zugeordnete Pixel festgestellt wird, dass es in einem Bereich ohne Bewegung (4) liegt, ferner zum Interpolieren durch die Bewegungskompensation in dem Fall, dass für das zugeordnete Pixel festgestellt wird, dass es in Bewegungskompensationsbereichen (5) liegt, ferner zum Interpolieren unter Verwendung der Bildsignale eines Rückrahmens in dem Fall, dass für das zugeordnete Pixel bestimmt wird, dass es in einem abgedeckten Bereich (7) liegt, sowie zum Interpolieren unter Verwendung der Bildsignale eines Vorderbildes in dem Fall, dass für das zugeordnete Pixel bestimmt wird, dass es in einem nicht abgedeckten Bereich (6) liegt.

26. Einrichtung nach Anspruch 25, dadurch gekennzeichnet, dass die Pixelbereichs-Klassifikationsvorrichtung (672) den zweiten Multiplexer (632) steuert, zum Interpolieren unter Verwendung der Bildsignale von dem Vorderbild in dem Fall, dass für das zugeordnete Pixel bestimmt, dass es in einem Bereich ohne Betrieb (4) liegt.

27. Einrichtung nach Anspruch 25, dadurch gekennzeichnet, dass die Pixelbereichs-Klassifikationsvorrichtung (672) den zweiten Multiplexer (632) steuert, zum Steuern unter Verwendung der Bildsignale des Rückbilds in dem Fall, dass für das zugeordnete Pixel bestimmt wird, dass es in einem Bereich ohne Bewegung (4) liegt.

28. Einrichtung nach Anspruch 1, dadurch gekennzeichnet, dass es ferner eine zweite Bildraten-Umsetzvorrichtung (700) enthält, zum Umsetzen der von der ersten Bildraten-Umsetzvorrichtung (400) empfangenen Bildsignale mit einer 60 Hz Bildrate in Bildsignale mit einer 59,94 Hz Bildrate.

29. Einrichtung nach Anspruch 28, dadurch gekennzeichnet, dass die zweite Bildraten-Umsetzvorrichtung (700) enthält:
einen FIFO-Speicher (710) zum Speichern und Senden eines Rahmens der Bildsignale der Bildsignale mit der 60 Hz Bildrate, die von der ersten Bildraten-Umsetzvorrichtung empfangen werden,
eine Steuervorrichtung (720) zum Steuern des FIFO-Speichers (710) unter Verwendung des Bildsynchronisiersignals bei 60 Hz, und
eine 59,94 Hz-Bildsynchronisationssignal-Erzeugungsvorrichtung (730) zum Erzeugen von Bildsynchronisiersignalen mit 59,94 Hz unter Verwendung des 60 Hz Bildsynchronisiersignals und eines 59,94 Hz Taktes.

30. Einrichtung nach Anspruch 29, dadurch gekennzeichnet, dass die Steuervorrichtung (720) enthält:
einen Zähler (721) zum Zählen der hieran angelegten 60 Hz Bildsynchronisiersignale, und
einen Komparator (722) zum Vergleichen des von dem Zähler (721) empfangenen Zählwerts mit 1000 zum Steuern des FIFO-Speichers (710).

31. Einrichtung nach Anspruch 30, dadurch gekennzeichnet, dass der Zähler (721) ein 10 Bit Zähler ist.

32. Einrichtung nach Anspruch 1, dadurch gekennzeichnet, dass er ferner eine zweite Bildraten-Umsetzvorrichtung (800) zum Umsetzen der von der - ersten Bildraten-Umsetzvorrichtung (400) empfangenen Bildsignale mit einer 59.94 Hz Bildrate in Bildsignale mit einer 60 Hz Bildrate enthält.

33. Einrichtung nach Anspruch 32, dadurch gekennzeichnet, dass die zweite Bildraten-Umsetzvorrichtung (800) enthält:
einen FIFO-Speicher (810) zum zeitweisen Speichern und Senden eines Rahmens der Bildsignale der von der ersten Bildraten-Umsetzvorrichtung (400) empfangenen Bildsignale mit einer 59.94 Hz Bildrate,
einem Bildspeicher (820) zum Speichern eines Rahmens der von dem FIFO-Speicher (810) empfangenen Bildrahmens und zum Senden der Bildsignale bei der 60 Hz Bildrate,
eine 60 Hz Bildsynchronisiersignal-Erzeugungsvorrichtung (840) zum Erzeugen von Bildsynchronisiersignalen bei 60 Hz unter Verwendung eines 59.94 Hz Bildsynchronisiersignals und eines 60 Hz Takts, und
eine Steuervorrichtung (830) zum Steuern des FIFO-Speichers (810) und des Rahmenspeichers (820) unter Verwendung der von der 60 Hz Bildsynchronisiersignal-Erzeugungsvorrichtung (840) empfangenen Bildsynchronisiersignale bei 60 Hz.

34. Einrichtung nach Anspruch 33, dadurch gekennzeichnet, dass die Steuervorrichtung (830) einen Zähler (831) zum Empfangen und Zählen der von der 60 Hz Bildsynchronisiersignal-Erzeugungsvorrichtung (840) gesendeten 60 Hz Bildsynchronisiersignale enthält, sowie einen Komparator (832) zum Vergleichen des von dem Zähler (831) empfangenen Zählwerts mit dem Wert 999 zum Steuern des FIFO-Speichers (810) und des Bildspeichers (820).

35. Einrichtung nach Anspruch 34, dadurch gekennzeichnet, dass der Zähler (831) ein 10 Bit Zähler ist.

## Revendications

1. Dispositif destiné à convertir la fréquence de trame d'un signal d'image comprenant :
un moyen de décodage (100) destiné à décoder un flux binaire compressé entrant, et à exécuter un classement en des informations de mouvement, des informations de type macro-bloc (1), un coefficient de quantum, et des paramètres de commande, lequel classement est réalisé en exécutant une opération de multiplexage inverse,
un moyen de quantification (200) destiné à quantifier de façon inverse les signaux fournis en sortie depuis le moyen de décodage (100) conformément au coefficient de quantum,
un moyen de conversion (300) destiné à exécuter une conversion par transformation en cosinus discrète inverse du signal quantifié de façon inverse fourni par le moyen de quantification (200), et générer ainsi une différence de trame décalée (DFD) sur la base de l'estimation de la vitesse du mouvement,
un moyen de compensation de mouvement (500) destiné à décoder des signaux d'image en utilisant les informations de mouvement fournies à partir du moyen de décodage (100) et la différence de trame décalée (DFD) fournie à partir du moyen de conversion (300), et
un premier moyen de conversion de fréquence de trame (400) destiné à classer des zones (4, 5, 6, 7) par pixels en utilisant les informations de mouvement, des informations de type macro-bloc, et la différence de trame décalée (DFD), et destiné à convertir la fréquence de trame des signaux d'image décodés provenant du moyen de compensation de mouvement (500), laquelle fréquence de trame est convertie sur la base des zones classées (4, 5, 6, 7) en exécutant des interpolations correspondantes conformément au résultat du classement.

2. Dispositif selon la revendication 1, dans lequel les zones classées par pixels sont des zones fixes (4), des zones à compensation de mouvement (5), des zones recouvertes (7) et des zones découvertes (6).

3. Dispositif selon la revendication 1,
dans lequel le moyen de compensation de mouvement (500) comprend,
un compensateur de mouvement (501) destiné à compenser un mouvement en utilisant les informations de mouvement, décodées d'un code à longueur variable et converties par un multiplexage inverse,
un additionneur (502) destiné à additionner la différence de trame décalée (DFD), décodée d'un code à longueur variable et convertie par un multiplexage inverse, quantifiée de façon inverse et convertie par une transformation en cosinus discrète inverse, et des signaux reçus depuis le compensateur de mouvement (501) et compensés pour le mouvement, et destiné à transmettre les signaux d'image au moyen de conversion de trame, et une mémoire de trame (503) destinée à mémoriser des signaux d'image reçus depuis l'additionneur (502), et destiné à transmettre les signaux d'image mémorisés au compensateur de mouvement (501).

4. Dispositif selon la revendication 1,
dans lequel le moyen de conversion de fréquence de trame (400) comprend,
un sommateur (401) destiné à effectuer la somme de la différence de trame décalée (DFD), décodée d'un code à longueur variable et convertie par un multiplexage inverse, quantifiée de façon inverse et convertie par une transformation en cosinus discrète inverse, en des unités de macro-blocs (1),
un premier circuit à verrouillage (402) destiné à mémoriser temporairement la différence de trame décalée (DFD) reçue du sommateur (401) dans des unités de macro-blocs (1),
un second circuit à verrouillage (403) destiné à mémoriser temporairement les informations de mouvement, décodées d'un code à longueur variable et converties par un multiplexage inverse, de manière à compenser un retard au niveau du sommateur (401),
un troisième circuit à verrouillage (404) destiné à mémoriser temporairement les informations de type macro-bloc, et décodées d'un code à longueur variable et converties par un multiplexage inverse, de manière à compenser le retard au niveau du sommateur (401), et
un convertisseur de fréquence de trame (405) destiné à recevoir les signaux de sortie transmis depuis les premier, second et troisième circuits à verrouillage (402, 403 et 404) et effectuer un classement dans des zones fixes (4), des zones à compensation de mouvement (5), des zones recouvertes (7) et des zones découvertes (6) par pixels, et convertir la fréquence de trame en utilisant les signaux reçus depuis le moyen de compensation de mouvement (500).

5. Dispositif selon la revendication 4, dans lequel le convertisseur de fréquence de trame (405) comprend,
une première mémoire de trame (410) destinée à mémoriser des signaux d'image reçus depuis le moyen de compensation de mouvement (500),
un premier diviseur (420) destiné à diviser les informations de mouvement reçues depuis le second circuit à verrouillage (403) par 2,
un moyen de commande d'interpolation (440) destiné à classer des zones dans des zones fixes (4), des zones à compensation de mouvement (5), des zones recouvertes (7) et des zones découvertes (6) par pixels en utilisant des signaux reçus depuis les premier et troisième circuits à verrouillage (402, 404) et le premier diviseur (420),
un moyen d'interpolation (430) destiné à exécuter une interpolation pour compléter une trame en utilisant des signaux d'image reçus depuis la première mémoire de trame (410) et des signaux reçus depuis le premier diviseur (420) sous la commande du moyen de commande d'interpolation (440), et
un premier multiplexeur (470) destiné à sélectionner et à transmettre l'un des signaux d'image reçus depuis la première mémoire de trame (410) et le moyen d'interpolation (430) sous la commande du moyen de commande d'interpolation (440).

6. Dispositif selon la revendication 5, comprenant en outre une seconde mémoire de trame (450) destinée à mémoriser temporairement les signaux d'image reçus depuis la première mémoire de trame (410) afin qu'ils correspondent à la synchronisation, et une troisième mémoire de trame (460) destinée à mémoriser temporairement les signaux d'image reçus depuis le moyen d'interpolation (430) afin qu'ils correspondent à la synchronisation.

7. Dispositif selon la revendication 5,
dans lequel le moyen de commande d'interpolation (440) comprend,
un premier comparateur (441) destiné à comparer la différence de trame décalée (DFD) reçue depuis le premier circuit à verrouillage (402) à une première valeur critique préétablie,
un moyen de classement de zone de pixel (442) destiné à commander le moyen d'interpolation (430) en classant une zone dans des zones fixes (4), des zones à compensation de mouvement (5), des zones recouvertes (7) et des zones découvertes (6) par pixels en utilisant des signaux reçus depuis le premier diviseur (420), le troisième circuit à verrouillage (404) et le premier comparateur (441), et
un moyen de détection de changement de scène (443) destiné à commander la sortie du premier multiplexeur (470) grâce à la détection des changements des scènes en utilisant des signaux reçus depuis le premier comparateur (441).

8. Dispositif selon la revendication 7, dans lequel le moyen de détection de changement de scène (443) comprend,
un sommateur (444) destiné à établir la somme des signaux reçus depuis le premier comparateur (441) dans des unités de trames,
un second comparateur (445) destiné à comparer les signaux reçus du sommateur (444) à une seconde valeur critique préétablie, et
un premier compensateur de retard (446) destiné à compenser des retards en mémorisant temporairement des signaux reçus depuis le second comparateur (445) et destiné à commander la sortie du premier multiplexeur (470).

9. Dispositif selon la revendication 7, dans lequel le moyen d'interpolation (430) comprend,
une seconde mémoire de trame (431) destinée à mémoriser les signaux d'image reçus depuis la première mémoire de trame (410),
un moyen d'interpolation par une moyenne (432) destiné à exécuter une interpolation avec la moyenne de deux trames en utilisant les signaux d'image reçus depuis les première et seconde mémoires de trame (410, 431),
un moyen d'interpolation de région à compensation de mouvement (434) destiné à exécuter la compensation d'un mouvement en utilisant des signaux reçus depuis le premier diviseur (420) sous la commande du moyen de classement de zone de pixel (442),
une troisième mémoire de trame (435) destinée à mémoriser des signaux reçus depuis le moyen d'interpolation de région à compensation de mouvement (434), et
un second multiplexeur (433) destiné à sélectionner et à transmettre des signaux reçus depuis les première, seconde et troisième mémoires de trame (410, 431, 435) et le moyen d'interpolation par une moyenne (432) sous la commande du moyen de classement de zone de pixel (442).

10. Dispositif selon la revendication 9, dans lequel le moyen de classement de zone de pixel (442) classe la zone dans des zones fixes (4), des zones à compensation de mouvement (5), des zones recouvertes (7) et des zones découvertes (6) classées par pixels.

11. Dispositif selon la revendication 9, dans lequel le moyen d'interpolation par une moyenne (432) comprend un additionneur (436) destiné à additionner les signaux d'image reçus depuis les première et seconde mémoires de trame (410, 431) et un second diviseur (437) destiné à diviser des signaux reçus depuis l'additionneur (436) par 2.

12. Dispositif selon la revendication 10, dans lequel le moyen de classement de zone de pixel (442) comprend,
un moyen de classement de type macro-bloc (481) destiné à classer les informations de type macro-bloc reçues du troisième circuit à verrouillage (404) en des informations intra-trame et des informations de compensation du mouvement,
un inverseur (485) destiné à inverser les signaux reçus du premier comparateur (441),
une porte ET (486) destinée à déterminer une zone à compensation de mouvement par une multiplication logique des signaux reçus depuis l'inverseur (485) et des informations de compensation de mouvement reçues du module de classement de type macro-bloc (481), et destinée à transmettre la zone à compensation de mouvement au moyen d'interpolation de région de compensation de mouvement (434),
une mémoire (487) destinée à mémoriser la position du pixel correspondant en utilisant des signaux reçus depuis le premier diviseur (420) en réponse au signal reçu depuis la porte ET (486),
un second compensateur de retard (482) destiné à compenser des retards en mémorisant des signaux reçus depuis le module de classement de type macro-bloc (481),
un contrôleur de sélection d'interpolation (483) destiné à commander le second multiplexeur (433) en réponse aux signaux mémorisés dans la mémoire (487) et aux signaux reçus depuis le second compensateur de retard (482), et
un troisième compensateur de retard (484) destiné à compenser des retards en mémorisant les signaux reçus depuis le contrôleur de sélection d'interpolation (483) et à transmettre les signaux à retard compensé vers le second multiplexeur (433).

13. Dispositif selon la revendication 12, dans lequel le contrôleur de sélection d'interpolation (483) commande le second multiplexeur (433) afin d'exécuter une interpolation avec la moyenne des deux trames dans le cas où les signaux reçus du second compensateur de retard (482) indiquent que le pixel correspondant est une zone fixe (4), pour réaliser une interpolation grâce à une compensation du mouvement dans le cas où les signaux reçus du second compensateur de retard (482) et de la mémoire (487) indiquent que le pixel correspondant est une zone à compensation de mouvement (5), afin de réaliser une interpolation en utilisant les signaux d'image d'une trame arrière ou d'une (n+1)^{ème} trame dans le cas où les signaux reçus du second compensateur de retard (482) et de la mémoire (487) indiquent que le pixel correspondant est une zone recouverte (7), et afin de réaliser une interpolation en utilisant les signaux d'image de la trame avant ou de la (n)^{ème} trame dans le cas où les signaux reçus du second compensateur de retard (482) indiquent que le pixel correspondant est une zone découverte (6).

14. Dispositif selon la revendication 13, dans lequel le contrôleur de sélection d'interpolation (483) commande le second multiplexeur (433) afin de réaliser une interpolation en utilisant les signaux d'image de la trame antérieure dans le cas où les signaux reçus du second compensateur de retard (482) indiquent que le pixel correspondant est une zone fixe (4).

15. Dispositif selon la revendication 13, dans lequel le contrôleur de sélection d'interpolation (483) commande le second multiplexeur (433) afin de réaliser une interpolation en utilisant les signaux d'image de la trame antérieure dans le cas où les signaux reçus depuis le second compensateur de retard (482) indiquent que le pixel correspondant est une zone fixe (4).

16. Dispositif selon la revendication 1, dans lequel le premier moyen de conversion de fréquence de trame (400) classe la zone dans des zones fixes (4), des zones à compensation de mouvement (5), des zones recouvertes (7) et des zones découvertes (6) par pixels grâce à une estimation des informations de mouvement et de la différence de trame décalée (DFD) en utilisant des signaux d'image de deux trames adjacentes reçus depuis le moyen de compensation de mouvement (500), et convertit la fréquence de trame des signaux d'image reçus depuis le moyen de compensation de mouvement (500) conformément aux zones classées.

17. Dispositif selon la revendication 16, dans lequel les zones classées par pixels sont des zones fixes (4), des zones à compensation de mouvement (5), des zones recouvertes (7) et des zones découvertes (6).

18. Dispositif selon la revendication 17, dans lequel le moyen de conversion de fréquence de trame (400) comprend,
une première et une seconde mémoires de trame (610, 620) reliées en série en vue de mémoriser les signaux d'image dans des unités de trames reçues depuis le compensateur de mouvement (500),
un moyen d'estimation de mouvement (600) destiné à estimer des informations de mouvement et une différence de trame décalée (DFD) en utilisant des signaux d'image de deux trames adjacentes reçus depuis la première et la seconde mémoires de trame (610, 620),
un premier diviseur (680) destiné à diviser les informations de mouvement reçues du moyen d'estimation de mouvement (600) par 2,
un moyen de commande d'interpolation (670) destiné à classer des zones par pixels en utilisant les informations de mouvement reçues du moyen d'estimation de mouvement (600) et les signaux reçus du premier diviseur (680),
un moyen d'interpolation (630) destiné à compléter une trame en exécutant une interpolation en utilisant les signaux d'image reçus depuis la première et la seconde mémoires de trame (610, 620) et les signaux reçus du premier diviseur (680) sous la commande du moyen de commande d'interpolation (670), et
un premier multiplexeur (660) destiné à sélectionner et à transmettre l'un des signaux d'image reçus de la première mémoire de trame (610) et du moyen d'interpolation (630) sous la commande du moyen de commande d'interpolation (670).

19. Dispositif selon la revendication 18, comprenant en outre une troisième mémoire de trame (640) destinée à mémoriser temporairement les signaux d'image reçus de la première mémoire de trame (610) pour qu'ils correspondent à la synchronisation, et une quatrième mémoire de trame (650) destinée à mémoriser temporairement les signaux d'image reçus depuis le moyen d'interpolation (630) pour qu'ils correspondent à la synchronisation.

20. Dispositif selon la revendication 18, dans lequel le moyen de commande d'interpolation (670) comprend,
un premier comparateur (671) destiné à comparer la différence de trame décalée (DFD) reçue du moyen d'estimation de mouvement à une première valeur critique,
un moyen de classement de zone de pixel (672) destiné à commander le moyen d'interpolation (630) grâce à un classement des zones dans des zones fixes (4), des zones à compensation de mouvement (5), des zones recouvertes (7) et des zones découvertes (6), par pixels en utilisant des signaux reçus du premier diviseur (680) et du comparateur (671), et
un moyen de détection de changement de scène (676) destiné à détecter des changements des scènes en utilisant des signaux reçus du premier comparateur (671) afin de commander la sortie du premier multiplexeur.

21. Dispositif selon la revendication 20, dans lequel le moyen de détection de changement de scène (676) comprend,
un sommateur (673) destiné à établir la somme des signaux reçus du premier comparateur (671) dans des unités de trames,
un second comparateur (674) destiné à comparer les signaux reçus du sommateur (673) à une seconde valeur critique préétablie, et
un premier compensateur de retard (675) destiné à compenser des retards en mémorisant temporairement des signaux reçus du second comparateur (674), et à commander la sortie du premier multiplexeur (660).

22. Dispositif selon la revendication 20, dans lequel le moyen d'interpolation (630) comprend,
un moyen d'interpolation par une moyenne (631) destiné à exécuter une interpolation avec la moyenne de deux trames en utilisant des signaux d'image reçus des première et seconde mémoires de trame (610, 620),
un moyen d'interpolation de région à compensation de mouvement (633) destiné à exécuter une compensation de mouvement en utilisant des signaux reçus de la seconde mémoire de trame (620) et du second diviseur (680) sous la commande du moyen de classement de zone de pixel (672),
une quatrième mémoire de trame (634) destinée à mémoriser les signaux reçus du moyen d'interpolation de région à compensation de mouvement (633), et
un second multiplexeur (632) destiné à sélectionner et à transmettre des signaux, reçus des première, seconde et troisième mémoires de trame (610, 620, 634) et du moyen d'interpolation par une moyenne (631) sous la commande du moyen de classement de zone de pixel (672).

23. Dispositif selon la revendication 22, dans lequel le moyen de classement de zone de pixel (672) classe les zones dans des zones fixes (4), des zones à compensation de mouvement (5), des zones recouvertes (7) et des zones découvertes (6) classées par pixels.

24. Dispositif selon la revendication 22, dans lequel le moyen d'interpolation par une moyenne (631) comprend un additionneur (635) destiné à additionner les signaux d'image reçus de la première et de la seconde mémoires de trame (610, 620) et un second diviseur (636) destiné à diviser les signaux reçus de l'additionneur (635) par 2.

25. Dispositif selon la revendication 23, dans lequel le moyen de classement de zone de pixel (672) commande le second multiplexeur (632) afin de réaliser une interpolation avec la moyenne des deux trames dans le cas où le pixel correspondant est défini comme étant une zone fixe (4), afin de réaliser une interpolation grâce à une compensation du mouvement dans le cas où le pixel correspondant est défini comme étant une zone à compensation de mouvement (5), afin de réaliser une interpolation en utilisant les signaux d'image d'une trame arrière dans le cas où le pixel correspondant est défini comme étant une zone recouverte (7), et afin de réaliser une interpolation en utilisant des signaux d'image d'une trame avant dans le cas où le pixel correspondant est défini comme étant une zone découverte (6) .

26. Dispositif selon la revendication 25, dans lequel le moyen de classement de zone de pixel (672) commande le second multiplexeur (632) afin de réaliser une interpolation en. utilisant les signaux d'image de la trame antérieure dans la cas où le pixel correspondant est défini comme étant une zone fixe (4).

27. Dispositif selon la revendication 25, dans lequel le moyen de classement de zone de pixel (672) commande le second multiplexeur (632) afin de réaliser une interpolation en utilisant les signaux d'image de la trame antérieure dans le cas où le pixel correspondant est défini comme étant une zone fixe (4).

28. Dispositif selon la revendication 1, comprenant en outre un second moyen de conversion de fréquence de trame (700) destiné à convertir des signaux d'image présentant une fréquence de trame de 60 Hz reçus du premier moyen de conversion de fréquence de trame (400) en des signaux d'image présentant une fréquence de trame de 59,94 Hz.

29. Dispositif selon la revendication 28, dans lequel le second moyen de conversion de fréquence de trame (700) comprend,
une mémoire de type FIFO (premier entré premier sorti) (710) destinée à mémoriser et à transmettre une trame de signaux d'image à partir des signaux d'image à la fréquence de trame de 60 Hz reçus du premier moyen de conversion de fréquence de trame,
un moyen de commande (720) destiné à commander la mémoire de type FIFO (710) en utilisant un signal de synchronisation de trame à 60 Hz, et
un moyen de génération de signal de synchronisation de trame à 59,94 Hz (730) destiné à générer des signaux de synchronisation de trame à 59,94 Hz en utilisant un signal de synchronisation de trame à 60 Hz et une horloge à 59,94 Hz.

30. Dispositif selon la revendication 29, dans lequel le moyen de commande (720) comprend,
un compteur (721) destiné à compter les signaux de synchronisation de trame à 60 Hz qui lui sont appliqués, et
un comparateur (722) destiné à comparer la valeur comptée reçue du compteur (721) à 1000 en vue de commander la mémoire de type FIFO (710).

31. Dispositif selon la revendication 30, dans lequel le compteur (721) est un compteur sur 10 bits.

32. Dispositif selon la revendication 1, comprenant en outre un second moyen de conversion de fréquence de trame (800) destiné à convertir des signaux d'image présentant une fréquence de trame de 59,94 Hz reçus du premier moyen de conversion de fréquence de trame (400) en des signaux d'image présentant une fréquence de trame de 60 Hz.

33. Dispositif selon la revendication 32, dans lequel le second moyen de conversion de fréquence de trame (800) comprend,
une mémoire de type FIFO (810) destinée à mémoriser temporairement et à transmettre une trame des signaux d'image à partir des signaux d'image présentant la fréquence de trame de 59,94 Hz reçus du premier moyen de conversion de fréquence de trame (400),
une mémoire de trame (820) destinée à mémoriser une trame des signaux d'image reçus de la mémoire de type FIFO (810) et à transmettre des signaux d'image à la fréquence de trame de 60 Hz,
un moyen de génération de signal de synchronisation de trame à 60 Hz (840) destiné à générer des signaux de synchronisation de trame à 60 Hz en utilisant un signal de synchronisation de trame à 59,94 Hz et une horloge à 60 Hz, et
un moyen de commande (830) destiné à commander la mémoire de type FIFO (810) et la mémoire de trame (820) en utilisant les signaux de synchronisation de trame à 60 Hz reçus du moyen de génération de signal de synchronisation de trame à 60 Hz (840).

34. Dispositif selon la revendication 33, dans lequel le moyen de commande (830) comprend un compteur (831) destiné à recevoir et à compter les signaux de synchronisation de trame à 60 Hz transmis depuis le moyen de génération de signal de synchronisation de trame à 60 Hz (840), et un comparateur (832) destiné à comparer la valeur comptée reçue du compteur (831) à 999 afin de commander la mémoire de type FIFO (810) et la mémoire de trame (820).

35. Dispositif selon la revendication 34, dans lequel le compteur (831) est un compteur sur 10 bits.
